(19) Europäisches Patentamt
European Patent Office
Office européen des brevets

(11) **EP 4 173 152 B1**

(12) **EUROPEAN PATENT SPECIFICATION**

(45) Date of publication and mention of the grant of the patent:
**01.04.2026 Bulletin 2026/14**

(21) Application number: **21735601.3**

(22) Date of filing: **16.06.2021**

(51) International Patent Classification (IPC):
*H04W 72/02* (2009.01)     *H04L 1/1825* (2023.01)
*H04L 1/1867* (2023.01)     *H04B 7/022* (2017.01)
*H04L 1/08* (2006.01)     *H04L 5/00* (2006.01)

(52) Cooperative Patent Classification (CPC):
**H04W 72/02; H04B 7/022; H04L 1/08;**
**H04L 1/1825; H04L 1/188; H04L 5/0037;**
**H04L 5/006;** H04L 5/0044; H04L 5/0091;
H04W 72/23

(86) International application number:
**PCT/EP2021/066291**

(87) International publication number:
**WO 2021/255117 (23.12.2021 Gazette 2021/51)**

(54) **MULTI-TRP CONFIGURED GRANT TRANSMISSION**

MULTI-TRP-KONFIGURIERTE BERECHTIGUNGSÜBERTRAGUNG

TRANSMISSION D'AUTORISATION CONFIGURÉE MULTI-TRP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2020 US 202063041408 P**

(43) Date of publication of application:
**03.05.2023 Bulletin 2023/18**

(73) Proprietor: **Telefonaktiebolaget LM Ericsson (publ)**
**164 83 Stockholm (SE)**

(72) Inventors:
• GERAMI, Majid
  224 73 LUND (SE)
• WANG, Min
  977 53 LULEÅ (SE)
• WÄNSTEDT, Stefan
  972 51 LULEÅ (SE)
• CHRISTOFFERSSON, Jan
  975 61 LULEÅ (SE)
• SINGH, Bikramjit
  02880 KIRKKONUMMI (FI)

(74) Representative: **Ericsson**
**Patent Development**
**Torshamnsgatan 21-23**
**164 80 Stockholm (SE)**

(56) References cited:
WO-A1-2019/244207

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention generally relates to wireless communication networks, and particularly relates to improvements to uplink (UL) transmissions by a wireless device to multiple transmission reception points (TRPs) in a wireless network for which the wireless device can select among multiple available transmission configurations.

## BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases. The present disclosure relates generally to NR, but the following description of Long-Term Evolution (LTE) technology is provided for context since it shares many features with NR.

LTE is an umbrella term for so-called fourth-generation (4G) radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

3GPP LTE Rel-10 supports bandwidths larger than 20 MHz. One important Rel-10 requirement is backward compatibility with LTE Rel-8, including spectrum compatibility. As such, a wideband LTE Rel-10 carrier (e.g., wider than 20 MHz) should appear as a plurality of carriers ("component carriers" or CCs) to an LTE Rel-8 ("legacy") terminal. Legacy terminals can be scheduled in all parts of the wideband LTE Rel-10 carrier. One way to achieve this is by Carrier Aggregation (CA), whereby a Rel-10 terminal can receives multiple CCs, each preferably having the same structure as a Rel-8 carrier. Additionally, LTE Rel-12 introduced dual connectivity (DC) whereby a UE can be connected to two network nodes simultaneously, thereby improving connection robustness and/or capacity.

The LTE E-UTRAN includes one or more evolved Node B's (eNB), each of which can serve one or more cells by which user equipment (UEs) communicate with the LTE network. As used within the 3GPP standards, "user equipment" or "UE" means any wireless communication device (e.g., smartphone or computing device) that is capable of communicating with 3GPP-standard-compliant network equipment, including E-UTRAN as well as UTRAN and/or GERAN, as the third-generation ("3G") and second-generation ("2G") 3GPP RANs are commonly known.

As specified by 3GPP, the E-UTRAN is responsible for all radio-related functions in the network, including radio bearer control, radio admission control, radio mobility control, scheduling, and dynamic allocation of resources to UEs in uplink and downlink, as well as security of the communications with the UE. In general, these functions reside in the respective eNBs, which communicate with each other via an X2 interface. The eNBs also are responsible for the E-UTRAN interface to the EPC, specifically an S1 interface to a Mobility Management Entity (MME) and a Serving Gateway (SGW). In general, the MME/S-GW handles both the overall control of the UE and data flow between the UE and the rest of the EPC. More specifically, the MME processes the signaling (e.g., control plane, CP) protocols between the UE and the EPC, which are known as the Non-Access Stratum (NAS) protocols. The S-GW handles all Internet Protocol (IP) data packets (e.g., user plane, UP) between the UE and the EPC and serves as the local mobility anchor for the data bearers when the UE moves between eNBs.

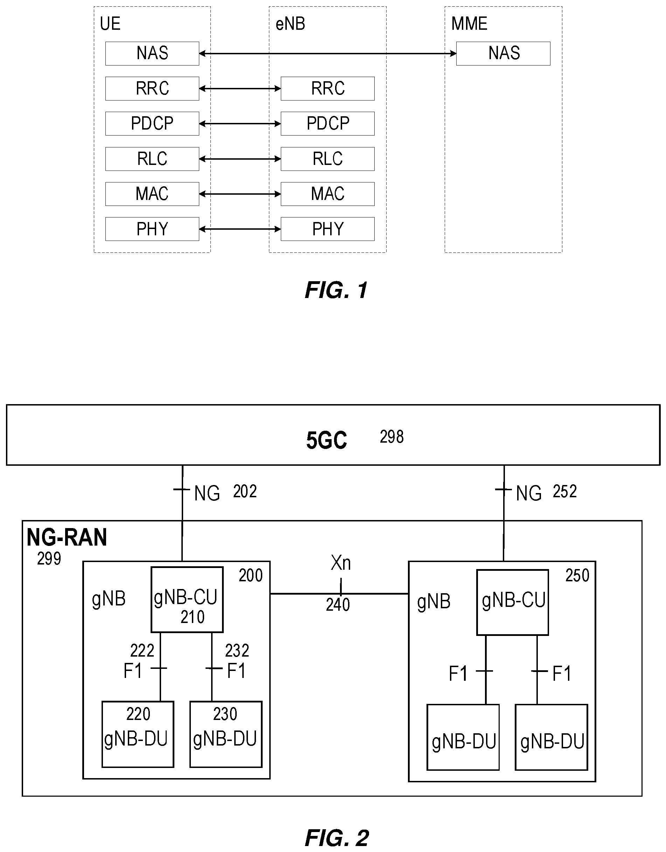

Figure 1 illustrates a block diagram of an exemplary Control (C)-plane protocol stack between a UE, an eNB, and an MME. The exemplary protocol stack includes Physical (PHY), Medium Access Control (MAC), Radio Link Control (RLC), Packet Data Convergence Protocol (PDCP), and Radio Resource Control (RRC) layers between the UE and eNB. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PDCP layer provides ciphering/deciphering and integrity protection for both U-plane and C-plane, as well as other functions for the U-plane such as header compression. The exemplary protocol stack also includes non-access stratum (NAS) signaling between the UE and the MME.

The RRC layer controls communications between a UE and an eNB at the radio interface, as well as the mobility of a UE between cells in the E-UTRAN. After a UE is powered ON it will be in the RRC_IDLE state until an RRC connection is established with the network, at which time the UE will transition to RRC_CONNECTED state (e.g., where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC_IDLE UE receives system information (SI) broadcast by a serving cell, performs measurements of neighbor cells to support cell reselection, and monitors a paging channel on PDCCH for pages from the EPC via eNB. A UE in RRC_IDLE state is known in the EPC and has an assigned IP address, but is not known to the serving eNB (e.g., there is no stored context).

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD). The LTE FDD downlink (DL) radio frame has a fixed duration of 10 ms and consists of 20 slots, numbered 0 through 19, each with a fixed duration of 0.5 ms. A 1-ms subframe comprises two consecutive slots where subframe *i* consists of slots 2*i* and 2i+1. Each exemplary DL slot consists of $N^{DL}_{symb}$ OFDM symbols, each of which includes $N_{sc}$ OFDM subcarriers. Exemplary values of $N^{DL}_{symb}$ can be 7 (with a normal CP) or 6 (with an extended-length CP) for subcarrier spacing (SCS) of 15 kHz. An exemplary LTE FDD UL radio frame can be configured in a similar manner, with each of the 20 UL slot including of $N^{UL}_{symb}$ OFDM symbols, each of which includes $N_{sc}$ OFDM subcarriers.

A combination of a particular subcarrier in a particular symbol is known as a resource element (RE). Each RE is used to transmit a particular number of bits, depending on the type of modulation and/or bit-mapping constellation used for that RE. For example, some REs may carry two bits using QPSK modulation, while other REs may carry four or six bits using 16- or 64-QAM, respectively. The radio resources of the LTE PHY are also defined in terms of physical resource blocks (PRBs). A PRB spans $N^{RB}_{sc}$ sub-carriers over the duration of a slot (*i.e.,* $N^{DL}_{symb}$ symbols), where $N^{RB}_{sc}$ is typically either 12 (with a 15-kHz SCS) or 24 (7.5-kHz SCS). The configuration of 15-kHz SCS and "normal" CP is often referred to as the numerology, $\mu$.

In general, an LTE physical channel corresponds to a set of REs carrying information that originates from higher layers. Downlink *(i.e.,* eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY downlink includes various reference signals (e.g., channel state information reference signals, CSI-RS), synchronization signals, and discovery signals.

PDSCH is the main physical channel used for unicast downlink data transmission, but also for transmission of RAR (random access response), certain system information blocks, and paging information. PBCH carries the basic system information, required by the UE to access the network. PDCCH is used for transmitting downlink control information (DCI) including scheduling information for DL messages on PDSCH, grants for UL transmission on PUSCH, and channel quality feedback (e.g., CSI) for the UL channel. PHICH carries HARQ feedback (e.g., ACK/NAK) for UL transmissions by the UEs.

Uplink *(i.e.,* UE to eNB) physical channels provided by the LTE PHY include Physical Uplink Shared Channel (PUSCH), Physical Uplink Control Channel (PUCCH), and Physical Random-Access Channel (PRACH). In addition, the LTE PHY uplink includes various reference signals including demodulation reference signals (DM-RS), which are transmitted to aid the eNB in the reception of an associated PUCCH or PUSCH; and sounding reference signals (SRS), which are not associated with any uplink channel.

PUSCH is the uplink counterpart to the PDSCH. PUCCH is used by UEs to transmit uplink control information (UCI) including HARQ feedback for eNB DL transmissions, channel quality feedback *(e.g.,* CSI) for the DL channel, scheduling requests (SRs), *etc.* PRACH is used for random access preamble transmission.

Within the LTE DL, certain REs within each LTE subframe are reserved for the transmission of reference signals, such as DM-RS mentioned above. Other DL reference signals include cell-specific reference signals (CRS), positioning reference signals (PRS), and CSI reference signals (CSI-RS). UL reference signals include DM-RS and SRS mentioned above. Other RS-like DL signals include Primary Synchronization Sequence (PSS) and Secondary Synchronization Sequence (SSS), which facilitate the UEs time and frequency synchronization and acquisition of system parameters (e.g., via PBCH).

In LTE, UL and DL data transmissions (e.g., on PUSCH and PDSCH, respectively) can take place with or without an explicit grant or assignment of resources by the network (e.g., eNB). In general, UL transmissions are usually referred to as being "granted" by the network *(i.e.,* "UL grant"), while DL transmissions are usually referred to as taking place on resources that are "assigned" by the network *(i.e.,* "DL assignment").

In case of a transmission based on an explicit grant/assignment, downlink control information (DCI) is sent to the UE informing it of specific radio resources to be used for the transmission. In contrast, a transmission without an explicit grant/assignment is typically configured to occur with a defined periodicity. Given a periodic and/or recurring UL grant and/or DL assignment, the UE can then initiate a data transmission and/or receive data according to a predefined configuration. Such transmissions can be referred to as semi-persistent scheduling (SPS, for DL), configured grant (CG, for UL), or grant-free transmissions.

Fifth generation (5G)NR technology shares many similarities with fourth-generation LTE. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. As another example, NR RRC layer includes RRC_IDLE and RRC_CONNECTED states, but adds an additional state known as RRC_INACTIVE, which has some properties similar to a "suspended" condition used in LTE.

In addition to providing coverage via "cells," as in LTE, NR networks also provide coverage via "beams." In general, a DL "beam" is a coverage area of a network-transmitted RS that may be measured or monitored by a UE. In NR, for example, such RS can include any of the following: SS/PBCH block (SSB), CSI-RS, tertiary reference signals (or any other sync signal), positioning RS (PRS), DMRS, phase-tracking reference signals (PTRS), *etc.* In general, SSB is available to UEs in any RRC state, while other RS *(e.g.,* CSI-RS, DM-RS, PTRS) are associated with specific UEs that have a network connection, *i.e.,* in RRC_CONNECTED state.

NR also uses semi-persistent scheduling (SPS) for DL transmissions and configured grants (CG) for UL transmissions. For NR UL, there are two types of configured grants. Type-1 are configured via RRC signaling only, while for Type-2, some parameters are preconfigured via RRC signaling and some PHY parameters are configured via MAC scheduling. The RRC configuration of a UL configured grant includes various parameters, including a *configuredGrant-Timer* value that is used for controlling operation of hybrid ARQ (HARQ) processes in the UL via a controlled grant timer ("CG timer") in the UE. A related feature is Autonomous Uplink (AUL), which is intended to support autonomous HARQ retransmissions using an UL configured grant.

Each NR base station (also referred to as "gNB") may include and/or be associated with a plurality of Transmission Reception Points (TRPs). Each TRP is typically an antenna array with one or more antenna elements and is located at a specific geographical location. In this manner, a gNB associated with multiple TRPs can transmit the same or different signals from each of the TRPs. For example, a gNB can transmit different version of the same signal on multiple TRPs to a single UE. Each of the TRPs can also employ beams for transmission and reception towards the UEs served by the gNB, as briefly mentioned above.

Transmitting data to multiple, spatially separated TRPs can improve the reliability of UL transmissions, which can be important for 5G services such as URLLC. Even so, there are various problems, issues, and/or difficulties with respect to using UL CGs for UE transmissions to multiple TRPs. These require solutions so that the reliability advantages of using multiple TRPs can be realized in 5G deployments.

WO2019244207 A1 discloses a user terminal transmitting an uplink shared channel to one or more transmission/reception points, TRPs, for each prescribed number of repetitions and controlling repeated transmissions of the uplink shared channel corresponding to the prescribed number of repetitions or redundancy version of the uplink shared channel.

## SUMMARY

It is the object if the invention to overcome exemplary problems described above. This object is achieved by the independent claims. Advantageous embodiments are described in the dependent claims and by the following description.

## BRIEF DESCRIPTION OF THE DRAWINGS

Figure 1 is a block diagram of exemplary protocol layers of the control-plane portion of the radio (Uu) interface between a user equipment (UE) and the Long-Term Evolution (LTE) Evolved UTRAN (E-UTRAN).

Figures 2-3 illustrate two high-level views of an exemplary 5G network architecture.

Figure 4 shows an example of a UE receiver combining transmissions from two different transmission reception points (TRPs) in a wireless network (e.g., E-UTRAN, NG-RAN).

Figures 5A-B show an exemplary arrangements of multi-TRP transmission in a 5G/NR network based on multiple scheduling DCIs and a single scheduling DCI, respectively.

Figure 6 shows four resource configurations for transmitting three (3) TB (or PDSCH) repetitions over different TRPs and/or using different transmission configuration indicator (TCI) states.

Figures 7A-7B show an exemplary ASN.1 data structure for a *ConfiguredGrantConfig* information element (IE) used for RRC configuration of NR type-1 and type-2 UL configured grants.

Figure 8 shows an exemplary procedure for limiting autonomous UL transmissions for a hybrid ARQ (HARQ) process.

Figure 9 shows an exemplary ASN.1 data structure for a *ConfiguredGrantConfig* IE, according to various exemplary embodiments of the present disclosure.

Figures 10A-B illustrate UE selection of UL CG configuration based on UL data arrival relative to transmission occasions, according to various exemplary embodiments of the present disclosure.

Figure 11 is a flow diagram of an exemplary method (e.g., procedure) for a UE, according to various exemplary embodiments of the present disclosure.

Figure 12 is a flow diagram of an exemplary method (e.g., procedure) for a network node, according to various exemplary embodiments of the present disclosure.

Figure 13 illustrates a block diagram of an exemplary wireless device or UE, according to various exemplary embodiments of the present disclosure.

Figure 14 illustrates a block diagram of an exemplary network node in a radio access network (e.g., an gNB in an NG-RAN), according to various exemplary embodiments of the present disclosure.

Figure 15 illustrates a block diagram of an exemplary network configuration usable to provide over-the-top (OTT) data services between a host computer and a UE, according to various exemplary embodiments of the present disclosure.

## DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Other objectives, features, and advantages of the enclosed embodiments will be apparent from the following description.

Furthermore, the following terms are used throughout the description given below:

- Radio Node: As used herein, a "radio node" can be either a "radio access node" or a "wireless device."
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), base station distributed components (*e.g.*, CU and DU), a high-power or macro base station, a low-power base station (*e.g.*, micro, pico, femto, or home base station, or the like), an integrated access backhaul (IAB) node, a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).
- Network Node: As used herein, a "network node" is any node that is either part of the radio access network (*e.g.*, a radio access node or equivalent name discussed above) or of the core network (*e.g.*, a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.*, administration) in the cellular communications network.

Note that the description herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As briefly mentioned above, transmitting data to multiple, spatially separated TRPs can improve the reliability of UL transmissions, which can be important for 5G services such as URLLC. Even so, there are various problems, issues, and/or difficulties with respect to using UL CGs for UE transmissions to multiple TRPs. These are discussed in more detail after the following the introduction to 5G/NR networks.

Figure 2 illustrates a high-level view of the 5G network architecture, consisting of a Next Generation RAN (NG-RAN) 299 and a 5G Core (5GC) 298. NG-RAN 299 can include a set of gNodeB's (gNBs) connected to the 5GC via one or more NG interfaces, such as gNBs 200, 250 connected via interfaces 202, 252, respectively. In addition, the gNBs can be connected to each other via one or more Xn interfaces, such as Xn interface 240 between gNBs 200 and 250. With respect the NR interface to UEs, each of the gNBs can support frequency division duplexing (FDD), time division duplexing (TDD), or a combination thereof.

NG-RAN 299 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," which is defined in 3GPP TS 23.501. If security protection for CP and UP data on TNL of NG-RAN interfaces is supported, NDS/IP shall be applied.

The NG RAN logical nodes shown in Figure 2 (and described in 3GPP TS 38.301 and 3GPP TR 38.801) include a central (or centralized) unit (CU or gNB-CU) and one or more distributed (or decentralized) units (DU or gNB-DU). For example, gNB 300 includes gNB-CU 210 and gNB-DUs 220 and 230. CUs *(e.g.,* gNB-CU 210) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 222 and 232 shown in Figure 2. The gNB-CU and connected gNB-DUs are only visible to other gNBs and the 5GC as a gNB. In other words, the F1 interface is not visible beyond gNB-CU.

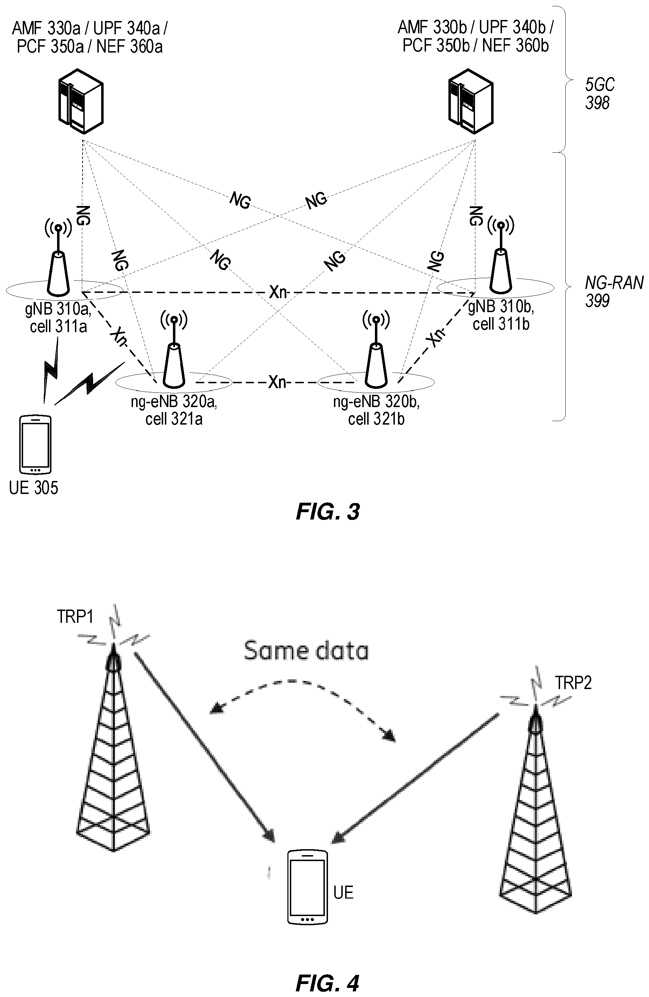

Figure 3 shows a high-level view of an exemplary 5G network architecture, including a Next Generation Radio Access Network (NG-RAN) 399 and a 5G Core (5GC) 398. As shown in the figure, NG-RAN 399 can include gNBs 310 *(e.g.,* 310a,b) and ng-eNBs 320 *(e.g.,* 320a,b) that are interconnected with each other via respective Xn interfaces. The gNBs and ng-eNBs are also connected via the NG interfaces to 5GC 398, more specifically to the AMF (Access and Mobility Management Function) 330 *(e.g.,* AMFs 330a,b) via respective NG-C interfaces and to the UPF (User Plane Function) 340 *(e.g.,* UPFs 340a,b) via respective NG-U interfaces. Moreover, the AMFs 330a,b can communicate with one or more policy control functions (PCFs, e.g., PCFs 350a,b) and network exposure functions (NEFs, e.g., NEFs 360a,b).

Each of the gNBs 310 can support the NR radio interface including frequency division duplexing (FDD), time division duplexing (TDD), or a combination thereof. In contrast, each of ng-eNBs 320 can support the LTE radio interface but, unlike conventional LTE eNBs (such as shown in Figure 1), connect to the 5GC via the NG interface. Each of the gNBs and ng-eNBs can serve a geographic coverage area including one more cells, including cells 311a-b and 321a-b shown as exemplary in Figure 3. As mentioned above, the gNBs and ng-eNBs can also use various directional beams to provide coverage in the respective cells. Depending on the particular cell in which it is located, a UE 305 can communicate with the gNB or ng-eNB serving that particular cell via the NR or LTE radio interface, respectively.

Each of the gNBs 310 may include and/or be associated with a plurality of Transmission Reception Points (TRPs). Each TRP is typically an antenna array with one or more antenna elements and is located at a specific geographical location. In this manner, a gNB associated with multiple TRPs can transmit the same or different signals from each of the TRPs. For example, a gNB can transmit different version of the same signal on multiple TRPs to a single UE. Each of the TRPs can also employ beams for transmission and reception towards the UEs served by the gNB, as discussed above.

In multi-TRP operation, a UE receives from (or transmit to) multiple TRPs in the NG-RAN. Until NR Rel-16, the multiple transmissions were on a single carrier, such that all are associated with a single cell (as compared to CA that utilizes multiple carriers/cells). An important benefit of multi-TRP operation is reliability, which relates to the spatial diversity achieved by using different transmission paths to/from the respective TRPs. More specifically, multi-TRP diversity helps both in reducing blocking by obstacles (macro diversity) and in mitigation of fast fading due to combinations of signal reflections at the receiver. The basic principle of operation is transmitting multiple copies of the same data payload and combining them at the receiver to improve the receiver's capability to recover the data payload. Figure 4 shows an example of a UE (430) combining transmissions from two different TRPs, i.e., TRP1 (410) and TRP2 (420). This can also be thought of as "instantaneous retransmission".

In NR, PDCCH is confined to a region referred to as control resource set (CORESET). A CORESET includes multiple RBs *(i.e.,* multiples of 12 REs) in the frequency domain and 1-3 OFDM symbols in the time domain, as further defined in 3GPP TS 38.211 § 7.3.2.2. A CORESET is functionally similar to the control region in an LTE subframe. In NR, however, each resource element group (REG) includes all 12 REs of one OFDM symbol in an RB, whereas an LTE REG includes only four REs. The CORESET time domain size can be configured by an RRC parameter. In LTE, the frequency bandwidth of the control region is fixed *(i.e.,* to the total system bandwidth), whereas in NR, the frequency bandwidth of the CORESET is variable. CORESET resources can be indicated to a UE by RRC signaling.

Several signals can be transmitted from the same base station (e.g., gNB) antenna from different antenna ports. These signals can have the same large-scale properties, such as in terms of parameters including Doppler shift/spread, average delay spread, and/or average delay. These antenna ports are then said to be "quasi co-located" or "QCL". The network can signal to the UE that two antenna ports are QCL with respect to one or more parameters. Once the UE knows that two antenna ports are QCL with respect to a certain parameter (e.g., Doppler spread), the UE can estimate that parameter based on one of the antenna ports and use that estimate when receiving the other antenna port. Typically, the first antenna port is represented by a measurement reference signal such as CSI-RS (referred to as "source RS") and the second antenna port is a DMRS (referred to as "target RS").

For instance, if antenna ports A and B are QCL with respect to average delay, the UE can estimate the average delay from the signal received from antenna port A (source RS) and assume that the signal received from antenna port B (target RS) has the same average delay. This can be useful for demodulation since the UE can know beforehand the properties of the channel when trying to measure the channel utilizing the DMRS.

Information about what assumptions can be made regarding QCL is signaled to the UE from the network. In NR, the following four types of QCL relations between a transmitted source RS and transmitted target RS are defined:

- Type A: {Doppler shift, Doppler spread, average delay, delay spread}
- Type B: {Doppler shift, Doppler spread}
- Type C: {average delay, Doppler shift}
- Type D: {Spatial Rx parameter}

QCL type D was introduced to facilitate beam management with analog beamforming and is known as "spatial QCL." There is currently no strict definition of spatial QCL, but the understanding is that if two transmitted antenna ports are spatially QCL, the UE can use the same Rx beam to receive them. When a QCL relation is signaled to a UE, it includes not only information about the particular QCL type (e.g., A, B, C, or D), but also a serving cell index, a BWP index, and a source reference signal identity (CSI-RS, TRS or SSB).

QCL Type D is the most relevant for beam management, but it is also necessary to convey a Type A QCL RS relation to UEs so they can estimate all the relevant large scale parameters. Typically, this can be done by configuring a UE with a tracking reference signal (TRS, e.g., a CSI-RS) for time/frequency offset estimation. To be able to use any QCL reference, the UE would have to receive it with a sufficiently good signal-to-interference-plus-noise ratio (SINR). In many cases, this constrains the TRS for a particular UE to be transmitted in a particular beam and/or beam configuration.

To introduce dynamics in beam and TRP selection, the UE can be configured through RRC signaling with *N* Transmission Configuration Indicator (TCI) states, where *N* is up to 128 in frequency range 2 (FR2, e.g., above 6GHz) and up to eight in FR1 (e.g., below 6GHz), depending on UE capability. Each configured TCI state includes parameters for the QCL associations between source RS (e.g., CSI-RS or SS/PBCH) and target RS (e.g., PDSCH/PDCCH DMRS antenna ports). TCI states can also be used to convey QCL information for the reception of CSI-RS. The *N* states in the list of TCI states can be interpreted as *N* possible beams transmitted by the network, or *N* possible TRPs used by the network to communicate with the UE.

More specifically, each TCI state can contain an ID along with QCL information for one or two source DL RSs, with each source RS associated with a QCL type, a serving cell index, a BWP index, and a source reference signal identity (CSI-RS, TRS or SSB). For example, two different CSI-RSs {CSI-RS1, CSI-RS2} can be configured in the TCI state as {qcl-Type1, qcl-Type2} = {Type A, Type D}. The UE can interpret this TCI state to mean that the UE can derive Doppler shift, Doppler spread, average delay, delay spread from CSI-RS1, and Spatial Rx parameter (e.g., RX beam to use) from CSI-RS2. In case QCL Type D is not applicable (e.g., low- or mid-band operation), then a TCI state contains only a single source RS. Unless specifically noted, however, references to source RS "pairs" include cases of a single source RS.

Furthermore, a first list of available TCI states can be configured for PDSCH, and a second list can be configured for PDCCH. This second list can contain pointers, known as TCI State IDs, to a subset of the TCI states configured for PDSCH. For the UE operating in FR1, the network then activates one TCI state for PDCCH (i.e., by providing a TCI to the UE) and up to eight TCI states for PDSCH, depending on UE capability.

As an example, a UE can be configured with four active TCI states from a list of 64 total configured TCI states. Hence, the other 60 configured TCI states are inactive, and the UE need not be prepared to estimate large scale parameters for those. On the other hand, the UE continuously tracks and updates the large-scale parameters for the four active TCI states by performing measurements and analysis of the source RSs indicated for each of those four TCI states. Each DCI used for PDSCH scheduling includes a pointer (or index) to one or two active TCI states for the scheduled UE. Based on this pointer, the UE knows which large scale parameter estimate to use when performing PDSCH DMRS channel estimation and PDSCH demodulation.

The different values that can be represented by the pointer are referred to as "codepoints." For example, a three-bit pointer field can represent up to eight TCI codepoints. Either one or two TCI states can be mapped to each TCI code point. When one TCI state is mapped to a TCI code point, the indicated TCI state is to be used for single-TRP transmission. When two TCI states are mapped to a TCI code point, the indicated TCI states are to be used for multi-TRP transmission.

Grouping of TCI states can be done through RRC or MAC CE signaling. In one option, TCI state sets are configured for PDSCH via RRC and each TCI state set contains one or two TCI states. MAC CE mechanism in Rel-15 is unchanged. In another option, TCI states are configured for PDSCH via RRC, as in Rel-15. Moreover, TCI states are selected by enhanced MAC CE indication mechanism whereby one or two TCI states can be activated for (e.g., to be associated with) each TCI code point in DCI.

Multi-TRP operation for PDSCH and/or PDCCH has been identified as an area for further enhancements to support more strict requirements on latency, reliability, and/or robustness for URLLC. For PDCCH, the same DCI is repeated across multiple CORESETs since each CORESET is configured with an individual TCI state. By this repetition, the UE can perform soft combining of the N PDCCH candidates to improve the DCI detection reliability. Multi-TRP URLLC schemes were introduced for PDSCH in NR Rel-16, while PDCCH robustness achieved via multi-TRP URLLC is expected to be addressed in NR Rel-17.

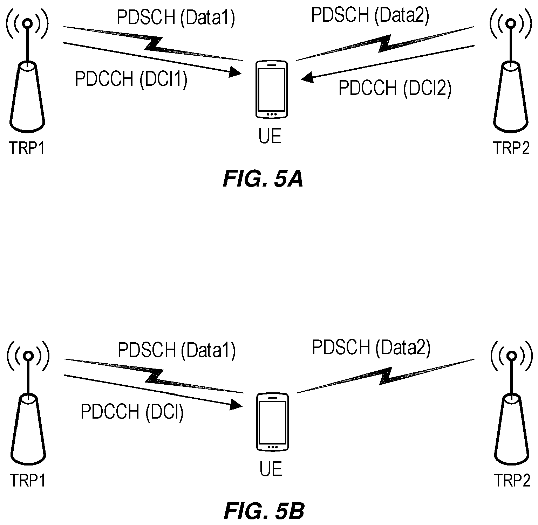

In addition, it was agreed in 3GPP RAN1 to support multi-DCI/multi-TRP transmission for enhanced mobile broadband (eMBB). Figure 5A shows an exemplary arrangement of multi-DCI/multi-TRP transmission for an NR network. In this arrangement, a single PDCCH can schedule two corresponding PDSCHs for a UE (530) independently from two separate TRPs (e.g., TRP1 510 and TRP2 520). Such a feature is beneficial especially when different TRPs are connected by non-ideal backhaul, in which case instantaneous joint scheduling across TRPs may not be feasible or extremely limited due to large delay of information exchange (e.g., CSI/data/scheduling) among TRPs.

In addition, it was also agreed in 3GPP RAN1 to support single-DCI/multi-TRP transmission. Figure 5B shows an exemplary arrangement of single-DCI/multi-TRP transmission for an NR network. In this arrangement, a single PDCCH (carrying a single DCI) schedules a single PDSCH, which includes different spatial layers transmitted by the two TRPs (510, 520) to the same UE (530) using the resources that were identified in the DCI.

As briefly mentioned above, reliability can be improved by transmitting multiple copies of the same data block, with each associated with a different TRP or a different TCI state. Repetition in DL is described in 3GPP TS 38.214 (v16.0.0) section 5.1.2, the relevant parts of which are repeated below.

*** Begin excerpt from 3GPP TS 38.214 ***

When receiving PDSCH scheduled by DCI format 1_1 or 1_2 in PDCCH with CRC scrambled by C-RNTI, MCS-C-RNTI, or CS-RNTI with NDI=1, if the UE is configured with *pdsch-AggregationFactor* in *pdsch-config,* the same symbol allocation is applied across the *pdsch-AggregationFactor* consecutive slots. When receiving PDSCH scheduled by DCI format 1_1 or 1_2 in PDCCH with CRC scrambled by CS-RNTI with NDI=0, or PDSCH scheduled without corresponding PDCCH transmission using *sps-Config* and activated by DCI format 1_1 or 1_2, the same symbol allocation is applied across the *pdsch-AggregationFactor,* in *sps-Config* if configured or in *pdsch-config* otherwise, consecutive slots. The UE may expect that the TB is repeated within each symbol allocation among each of the *pdsch-AggregationFactor* consecutive slots and the PDSCH is limited to a single transmission layer. For PDSCH scheduled by DCI format 1_1 or 1_2 in PDCCH with CRC scrambled by CS-RNTI with NDI=0, or PDSCH scheduled without corresponding PDCCH transmission using *sps-Config* and activated by DCI format 1_1 or 1_2, the UE is not expected to be configured with the time duration for the reception of *pdsch-AggregationFactor* repetitions, in *sps-Config* if configured or in *pdsch-config* otherwise, larger than the time duration derived by the periodicity P obtained from the corresponding *sps-Config.* The redundancy version to be applied on the $n^{th}$ transmission occasion of the TB, where n = 0, 1, ...*pdsch-AggregationFactor* -1, is determined according to table 5.1.2.1-2 and "$rv_{id}$ indicated by the DCI scheduling the PDSCH" in table 5.1.2.1-2 is assumed to be 0 for PDSCH scheduled without corresponding PDCCH transmission using *sps-Config* and activated by DCI format 1_1 or 1_2.

*** End excerpt from 3GPP TS 38.214 ***

Likewise, repetition in UL is described in 3GPP TS 38.214 (v16.0.0) section 6.1.2, the relevant parts of which are repeated below.

*** Begin excerpt from 3GPP TS 38.214 ***

For PUSCH repetition Type A, when transmitting PUSCH scheduled by DCI format 0_1 or 0_2 in PDCCH with CRC scrambled with C-RNTI, MCS-C-RNTI, or CS-RNTI with NDI=1, the number of repetitions K is determined as

- if *numberofrepetitions* is present in the resource allocation table, the number of repetitions K is equal to *numberofrepetitions;*
- elseif the UE is configured with *pusch-AggregationFactor,* the number of repetitions *K* is equal to *pusch-AggregationFactor;*
- otherwise *K = 1.*

For PUSCH repetition Type A, in case *K>1,* the same symbol allocation is applied across the *K* consecutive slots and the PUSCH is limited to a single transmission layer. The UE shall repeat the TB across the K consecutive slots applying the same symbol allocation in each slot. The redundancy version to be applied on the nth transmission occasion of the TB, where n = 0, 1, ... K-1, is determined according to table 6.1.2.1-2.

*** End excerpt from 3GPP TS 38.214 ***

An NR slot can include 14 OFDM symbols for normal cyclic prefix and 12 symbols for extended cyclic prefix. Like in LTE, an NR resource element (RE) consists of one subcarrier in one slot, and a resource block (RB) consists of a group of 12 contiguous OFDM subcarriers for a duration of a slot (e.g., 14 symbols). Also, like LTE, NR supports slot-based scheduling but also includes a Type-B scheduling, known as "mini-slots." These are shorter than slots, typically ranging from one symbol up to one less than the number of symbols in a slot *(e.g.,* 13 or 11), and can start at any symbol of a slot. Mini-slots can be used if the transmission duration of a slot is too long and/or the occurrence of the next slot start (slot alignment) is too late.

Multi-antenna technology can be used to improve various aspects of a communication system (such as 5G/NR networks), including system capacity *(e.g.,* more users per unit bandwidth per unit area), coverage *(e.g.,* larger area for given bandwidth and number of users), and increased per-user data rate *(e.g.,* in a given bandwidth and area). Directional antennas can also ensure better wireless links as a mobile or fixed device experiences a time-varying channel.

The availability of multiple antennas at the transmitter and/or the receiver can be utilized in different ways to achieve different goals. For example, multiple antennas can provide diversity gain against radio channel fading. A multi-antenna transmitter can achieve diversity even without any knowledge of the channels between the transmitter and the receiver, so long as there is low mutual correlation between the channels of the different transmit antennas.

In other configurations, multiple antennas at the transmitter and/or the receiver can be used to shape or "form" the overall antenna beam *(e.g.,* transmit and/or receive beam, respectively) in a certain way, with the general goal being to improve the received signal-to-interference-plus-noise ratio (SINR) and, ultimately, system capacity and/or coverage. This can be done, for example, by maximizing the overall antenna gain in the direction of the target receiver or transmitter or by suppressing specific dominant interfering signals.

In relatively good channel conditions, the capacity of the channel becomes saturated such that further improving the SINR provides limited increases in capacity. In such cases, using multiple antennas at both the transmitter and the receiver can be used to create multiple parallel communication "channels" over the radio interface. This can facilitate a highly efficient utilization of both the available transmit power and the available bandwidth resulting in, *e.g.,* very high data rates within a limited bandwidth without a disproportionate degradation in coverage. These techniques are commonly referred to as "spatial multiplexing" or multiple-input, multiple-output (MIMO) antenna processing.

5G networks are expected to operate in millimeter-wave (mmW) bands, such as 6 GHZ and above. Radio signals in these bands suffer from high oxygen absorption, high penetration loss, and a variety of blockage problems. On the other hand, with wavelengths less than a centimeter, it is possible to pack a large number of antenna elements into a single antenna array with a compact formfactor. Such arrays can address many of the problems associated with mmW bands. Consequently, directional transmission and reception via antenna arrays expected to be used by both UE and gNB (or TRP) in 5G. Depending on their respective radio architectures, however, such devices may be limited to transmitting/receiving in a single (or a small number) of directions simultaneously.

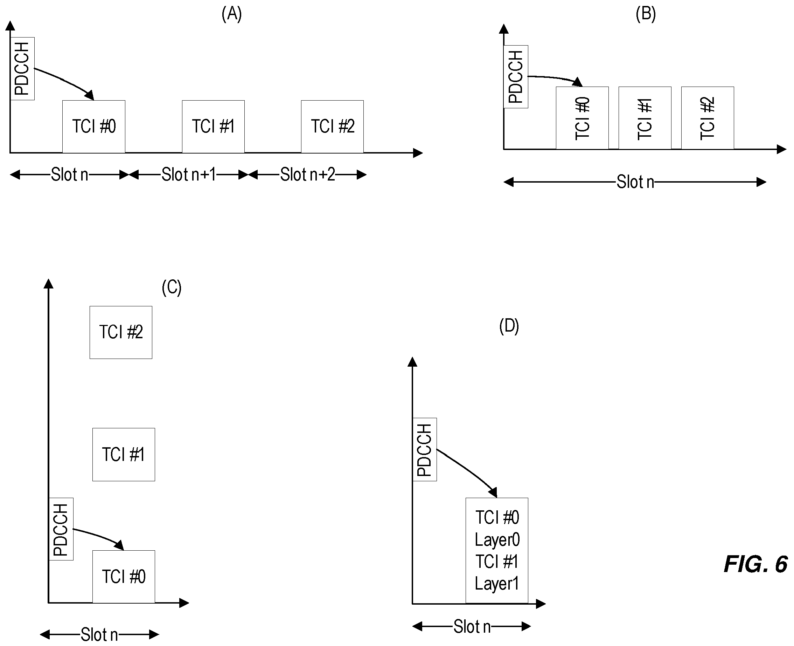

Figure 6 shows four possible resource configurations for transmitting three (3) TB (or PDSCH) repetitions over different TRPs and/or TCI states. In each case, the repetitions are scheduled by a single PDCCH. Configuration (A) is an exemplary time-based PDSCH repetition in which different copies of a TB are transmitted in consecutive slots using different TCI states 0-2 but using a single frequency and a single spatial layer. This configuration is similar to what exists in NR Rel-15, configured with the RRC parameter *pdsch-AggregationFactor.* The respective PDSCH repetitions use a predefined sequence of redundancy versions (RVs).

Configuration (B) is similar to (A) except that the different copies are transmitted in consecutive mini-slots in a slot. This can reduce latency compared to (A). Configuration (C) is an exemplary frequency-based PDSCH repetition in which different copies of a TB are transmitted in different frequency regions using different TCI states 0-2 but in the same symbol and with a single spatial layer. Configuration (D) is an exemplary spatial-based PDSCH repetition in which two different copies are transmitted on different spatial layers (e.g., with MIMO) using different TCI states 0-1.

NR supports two types of pre-configured UL resources, both of which are similar to existing LTE semi-persistent scheduling (SPS) with some enhancements such as support for transport block (TB) repetitions. In type 1, UL data transmission with configured grant is based only on RRC configuration without any L1 signaling. Type 2 is similar to the LTE SPS feature, where some parameters are preconfigured via RRC and some physical layer parameters are configured via MAC scheduling. L1 signaling is used for activation/deactivation of a type-2 grant. For example, a NR gNB explicitly activates the configured resources on PDCCH and the UE confirms reception of the activation/deactivation grant using a MAC control element.

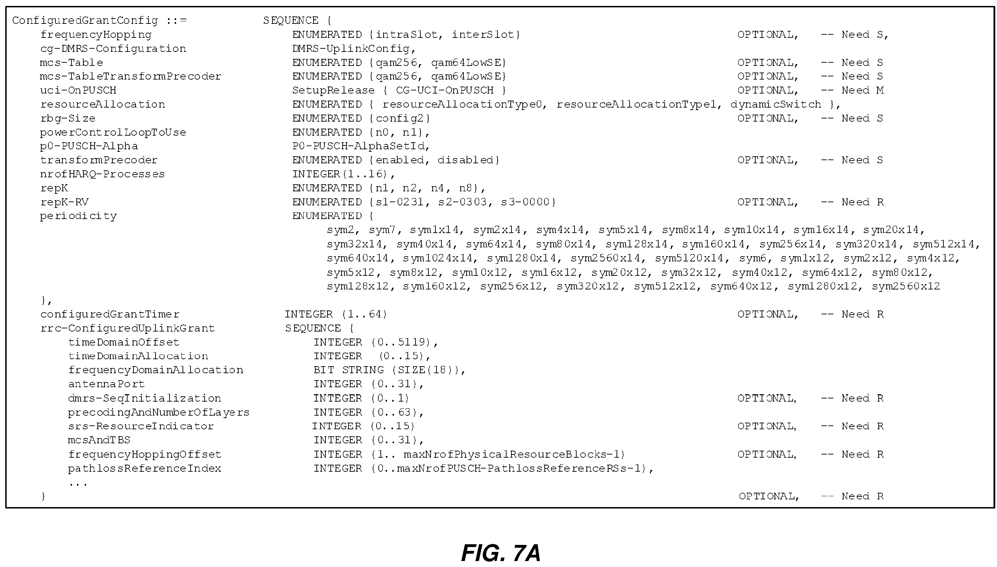

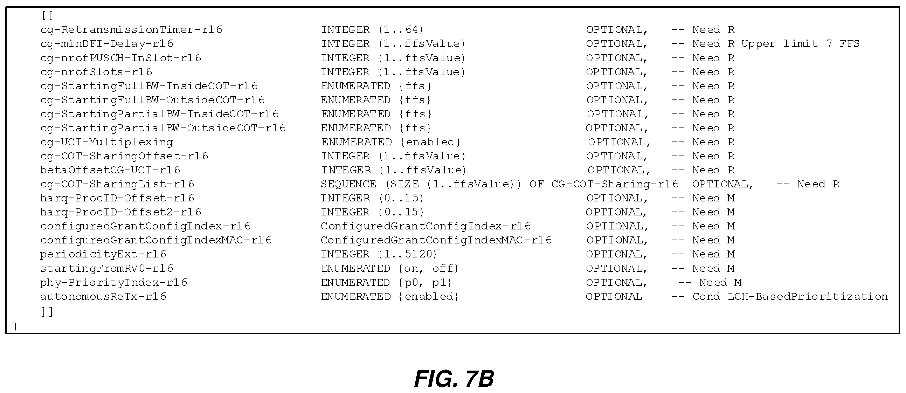

Figure 7, which includes Figures 7A-B, shows an exemplary ASN.1 data structure for a *ConfiguredGrantConfig* information element (IE) used for RRC configuration of NR type-1 and type-2 UL configured grants. The IE shown in Figure 7 includes an *srs-ResourceIndicator* field that points to one of the UL sounding reference signal (SRS) resources in an SRS resource configuration provided by the network via RRC signaling. The SRS resource can also be configured with a spatial relation to a DL RS (e.g., SSB or CSI-RS) or another UL SRS resource. In other words, the UE should transmit PUSCH based on the UL configured grant using the same precoder or beamforming weights as used for the transmission of the SRS identified by the *srs-ResourceIndicator* field and the SRS resource configuration.

As stated in the 3GPP TS 38.214 excerpts above, the same resource configuration is used for all K repetitions of a transport block (TB) of data, where K also includes the initial transmission. Possible values of K are {1, 2, 4, 8}. The parameters *repK* and *repK-RV* in Figure 7 define the K repetitions to be applied to the transmitted transport block and the redundancy version (RV) pattern to be applied to the repetitions, respectively. The n-th transmission occasion of the K repetitions (n=1, 2, ..., K) is associated with the (mod(n-1,4)+1)-th value in the configured RV sequence. The initial transmission of a transport block may start at:

- the first transmission occasion of K repetitions if the configured RV sequence is {0,2,3,1},
- any of the transmission occasions of K repetitions that are associated with RV=0 if the configured RV sequence is {0,3,0,3},
- any of the transmission occasions of K repetitions if the configured RV sequence is {0,0,0,0}, except the last transmission occasion when K=8.

For any RV sequence, the repetitions shall be terminated after transmitting K repetitions, or at the last transmission occasion among the K repetitions within a periodicity (P), or when a UL grant for scheduling the same TB is received within P, whichever condition is reached first. The UE is not expected to be configured with the time duration for the transmission of K repetitions larger than the time duration derived by P.

For both Type 1 and Type 2 PUSCH transmissions with a configured grant, when the UE is configured with *repK* > 1, the UE shall repeat the TB across the *repK* consecutive slots applying the same symbol allocation in each slot. If the UE determines that the slot configuration (as defined in 3GPP TS 38.213 section 11.1) indicates symbols allocated for PUSCH as being DL symbols instead, the transmission on that slot is omitted for multi-slot PUSCH transmission.

For both types, UL periodicity is configured via the *periodicity* field in Figure 7. Table 2 below summarizes periodicities (in symbols) supported for various subcarrier spacing (SCS).

Table 2.

| SCS | Periodicity (sym.) | Possible values of n |
|---|---|---|
| 15 kHz | 2, 7, or n*14 | 1, 2, 4, 5, 8, 10, 16, 20, 32, 40, 64, 80, 128, 160, 320, 640 |
| 30 kHz | | 1, 2, 4, 5, 8, 10, 16, 20, 32, 40, 64, 80, 128, 160, 320, 640, 1280 |
| 60 kHz (normal CP) | | 1, 2, 4, 5, 8, 10, 16, 20, 32, 40, 64, 80, 128, 160, 320, 640, 1280, 2560 |
| 60 kHz (ext. CP) | 2, 6, or n*12 | |

For Type 1 configured grants, time resources are configured via RRC signalling:

- *timeDomainAllocation:* index into a table of 16 possible combinations of PUSCH mapping type (TypeA or TypeB), start symbol S for the mapping (S = OFDM symbol 0, 2, 4, or 8 within a slot), and length L of the mapping (L = 4, 6, 8, 10, 12, or 14 OFDM symbols).

- *timeDomainOffset:* Offset of a resource with respect to SFN = 0 in time domain.

For Type2 configured grants, the periodicity is configured by RRC in the same way as for Type1, but the slot offset is dynamically indicated by the slot in which the UE receives the DCI that activates the Type2 configured grant. In contrast to Type1, the time domain allocation of PUSCH is indicated dynamically by DCI via the time domain resource assignment field (i.e., slot/length indicator value, SLIV) in the same way as for scheduled (non-CG) PUSCH.

After an UL grant is configured for a CG type 1, the MAC entity shall consider that the $N^{th}$ sequential UL grant occurs in the symbol that satisfies the following equation (1):

[(SFN $\times$ *numberOfSlotsPerFrame* $\times$ *numberOfSymbolsPerSlot)* + (slot number in the frame $\times$ *numberOfSymbolsPerSlot)* + symbol number in the slot] = (*timeDomainOffset* $\times$ *numberOfSymbolsPerSlot* + S + N $\times$ periodicity) modulo (1024 $\times$ *numberOfSlotsPerFrame* $\times$ *numberOfSymbolsPerSlot),*

where S is the starting symbol specified by *timeDomainAllocation.*

Similarly, after an UL grant is configured for a CG type 2, the MAC entity shall consider that the $N^{th}$ sequential UL grant occurs in the symbol that satisfies the following equation (2):

[(SFN $\times$ *numberOfSlotsPerFrame* $\times$ *numberOfSymbolsPerSlot)* + (slot number in the frame $\times$ *numberOfSymbolsPerSlot)* + symbol number in the slot] = [SFN$_{start\ time}$ $\times$ *numberOfSlotsPerFrame* $\times$ *numberOfSymbolsPerSlot* + slot$_{start\ time}$ $\times$ *numberOfSymbolsPerSlot* + symbol$_{start\ time}$ + N $\times$ *periodicity]* modulo (1024 $\times$ *numberOfSlotsPerFrame* $\times$ *numberOfSymbolsPerSlot),*

where SFN$_{start\ time}$, slot$_{start\ time}$, and symbol$_{start\ time}$ are the SFN, slot, and symbol, respectively, of the first transmission of PUSCH where the configured UL grant was (re-)initialised.

For example, assuming 30-kHz subcarrier spacing, to configure UL resources on consecutive slots, a UE must be configured with one of the following:

- Periodicity = 2 symbols, S = 0, L = 2;
- Periodicity = 7 symbols, S = 0, L = 7; and
- Periodicity = 14 symbols (i.e., 1 slot, n = 1), S = 0, L = 14,

where S is the starting symbol and L is the length (in symbols) of PUSCH as configured in *timeDomainAllocation.*

A *configuredGrantTimer* (CGT) is used to prevent an UL CG from overriding and/or preempting a TB scheduled with a dynamic grant (i.e., new transmission or retransmission), or an initial TB with another UL CG (i.e., new transmission). However, there is no explicit HARQ ACK/NACK in Rel-15. Rather, the gNB implicitly indicates an ACK by providing an UL grant for a new transmission.

Expiration of the CGT indicates an ACK for a HARQ process associated with the UL CG. The CGT is (re)started for an associated HARQ process upon PUSCH transmission based on a dynamic grant (i.e., new transmission or retransmission) or a configured grant (i.e., new transmission). The CGT is stopped when the UE has received a PDCCH indicating configured grant Type 2 activation, or upon an implicit ACK for the associated HARQ process (i.e., a grant for a new transmission).

In NR Rel-15, only an initial transmission of a TB is allowed to use either type of an UL CG. In other words, any HARQ retransmissions of a TB must rely on dynamic UL grant, which is indicated via PDCCH addressed to CS-RNTI. As briefly mentioned above, autonomous uplink (AUL) is being developed for NR Rel-16. AUL is intended to support autonomous HARQ retransmission using a configured grant. In this arrangement, a new UE timer (referred to as "CG retransmission timer" or CGRT for short) is used to protect the HARQ procedure so that the retransmission can use the same HARQ process for both transmission and retransmission of a transport block (TB) of UL data. CGRT is configured by the parameter *cg-RetransmissionTimer* shown in Figure 7. The CGRT is started for a HARQ process configured with AUL upon the data transmission using a configured grant, and a retransmission using another configured grant is triggered when the CGRT expires.

This functionality helps the UE to avoid a HARQ process being stalled in case a gNB has missed the HARQ transmission initiated by UE. However, an observed issue is that a UE may just repetitively initiate autonomous HARQ retransmissions for a HARQ process for a long duration, but the gNB may not successfully receive the transmissions, e.g., due to bad radio channel quality or repetitive listen-before-talk (LBT) failures in case of a shared channel. This is undesirable since the data in the TB may no longer be useful and further retransmission attempts would unnecessarily congest the channel and affect the latency of other packets in the UL buffer.

The UE may eventually trigger RLC-layer retransmission for an RLC PDU that is undergoing HARQ retransmissions. However, the retransmitted RLC PDU would occupy a different HARQ process, such that the UE would then maintain two HARQ processes in transmission for the same RLC PDU and the gNB's RLC receiver may receive duplicate RLC PDUs. This may create problems with wraparound of RLC sequence number. In addition, the second received RLC PDU may be treated as new data and passed to upper layers rather than being dropped as a duplicate.

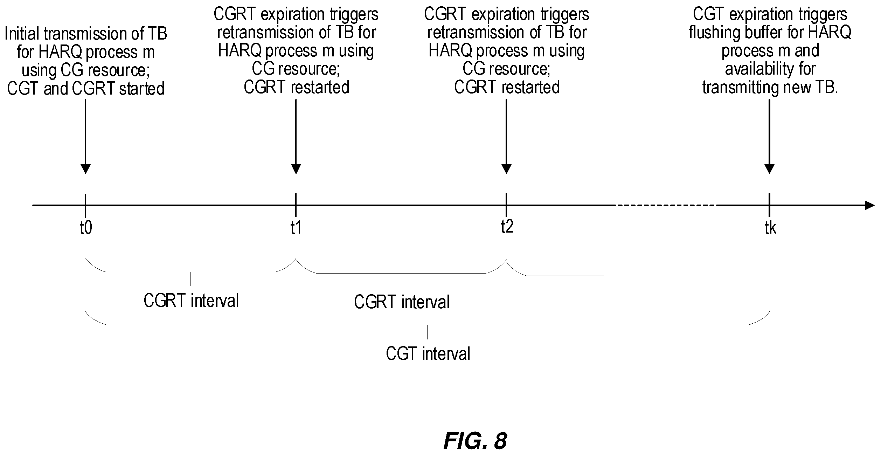

Therefore, it is necessary to limit UE-triggered AUL retransmissions for a HARQ process. To address this issue, the existing CGT is configured to indicate the maximum amount of time for the UE to complete transmission for a HARQ process. When the CGT expires, the UE should flush the HARQ buffer for this HARQ process and transmit new data associated with it. If both CGT and CGRT are configured for a HARQ process, both timers can be operated in parallel. In this way, the UE can perform HARQ retransmission using CG resources for a HARQ process while CGT is running for the process. The value used for CGT should be longer than the value used for CGRT. An example of the above-described procedure is illustrated in Figure 8.

A UE can be provided with multiple active UL CGs for the UE's active bandwidth part (BWP) in the UE's serving cell. The availability of multiple CGs can, for example, enhance reliability and reduce latency for critical services. In addition, for NR in unlicensed spectrum (e.g., NR-U), multiple CGs can allow a UE to switch to slot-based transmissions after initiating the COT (channel occupancy time) to minimize DMRS and UCI overhead.

There can be one or more HARQ processes in the HARQ process pool assigned to each CG configuration. There is also a separate CGT timer and CGRT setting associated with each CG configuration. HARQ processes can also be shared between CG configurations, which can increase flexibility and avoid depletion of limited HARQ process space for the UE.

A logical channel (LCH) can be mapped to multiple CG configurations, such that the UE can transmit data of the LCH using multiple active CG resources at the same time. If a TB was transmitted using a CG resource, the TB can be retransmitted using the CG resource (among the set of CG resources mapped to the LCH) that comes earliest in the time, which helps to reduce the latency. However, the CG resource selected for retransmission should be the same size as the CG resource used for the initial transmission to avoid the need for rate-matching. In addition, the UE shall use the same HARQ process for transmission and retransmission of a TB.

The CGT for a HARQ process shall be only started when the TB using this HARQ process is initially transmitted. The value of the CGT is set according to the configuration of the CG resource used for the initial transmission. In parallel, the CGRT shall be (re)started for every transmission/retransmission attempt. For example, if an initial TB transmission uses a resource in CG configuration 1, the CGRT is started using the timer value included in CG configuration 1. If the TB retransmission is performed with the resource in CG configuration 2, the CGRT need to be restarted using the timer value included in CG configuration 2.

The HARQ process number field in an UL DCI (e.g., formats 0_0 and 0_1) scrambled by CS-RNTI is used to indicate which CG configuration is to be activated/deactivated/reactivated and which CG configurations are to be released. In the DCI, NDI in the received HARQ information is 0. Upon reception of an activation/deactivation/reactivation command, the UE sends the gNB a confirmation MAC CE including a bitmap in which each bit position corresponds to a particular one of the CG configurations, e.g., the bit position corresponds to the CG index.

In view of the above, there are several problems, issues, and/or difficulties with the use of UL CGs with multiple TRPs. For example, currently an UL CG is assumed for each individual TRP. The UE behavior when configured by multi TRPs is not clear, e.g., whether and/or how to perform cross TRP transmission. Furthermore, a UE does not have flexibility to modify and/or adjust a multi-TRP configuration. For example, a UE configured to transmit to TRP1 and TRP2 cannot decide to transmit only to TRP2. Additionally, the mapping of multiple TB repetitions to specific TRPs is not specified. As an example, if K repetitions are required for URLLC, which of the K repetitions are transmitted by available TRPs is undefined. Moreover, autonomous re-transmission across multiple TRPs is not defined.

Accordingly, embodiments of the present disclosure provide novel, flexible, and efficient techniques for a UE to select among a plurality of multi-TRP configurations available for transmission in relation to an UL CG. For example, the UE can select a particular multi-TRP configuration based on various factors such as UL data for transmission at the UE (e.g., amount, arrival rate, type of service, QoS requirements, etc.), UE energy consumption, UL radio channel conditions, etc. The UE can then transmit (or retransmit) UL data to the multiple TRPs based on the selected configuration. By selecting and utilizing multi-TRP configuration in this manner, the UE can reduce energy consumption and/or improve data transmission reliability and/or latency.

The following description of exemplary embodiments is given in the context of NR, including licensed and unlicensed operation, such as NR-U. Even so, NR-U is only exemplary, and embodiments are equally applicable to other licensed (e.g., LTE) and unlicensed (e.g., LTE LAA/eLAA/feLAA /MulteFire) operation. In general, embodiments are applicable to any UE-triggered transmission that is made without receiving dynamically assigned resources from a serving network node (e.g., gNB).

According to a first group of embodiments, a UE is configured with one or more UL CG configurations that include, contain, and/or are associated with a set of CG resources across multiple TRPs. Each of these can be referred to as a "multi-TRP configuration" and can include the number of transmissions to each TRP, TCI state of each TRP, BWP/SCS of each TRP, etc. For example, the CG resources comprising an UL CG configuration may be associated with different TRPs, e.g., TRPi, where i=1...N. In addition, for each time-domain transmission occasion associated with an UL CG, there may be multiple CG resources in the frequency domain (e.g., that overlap in time). According to various embodiments described below, the UE can use various techniques to determine which CG resource shall be chosen for each transmission occasion.

In some embodiments, the UE can select the CG resource for UL transmission that is associated with the highest-quality DL radio channel from a TRP to the UE. The DL radio channel quality may be measured by the UE in terms of various metrics such as reference signal received power (RSRP), reference signal received quality (RSRQ), received signal strength (RSSI), signal-to-interference-and-noise ratio (SINR), signal-to-interference ratio (SIR), channel occupancy, listen-before-talk (LBT) failures, clear channel assessment (CCA) failures (e.g., count or success/failure ratio), etc.

In other embodiments, the UE can select the CG resource for UL transmission that is associated with the highest-quality UL radio channel from the UE to a TRP. The UL radio connection quality may be measured by the UE in terms of various metrics, including any of the following:

- UL latency, e.g., UP or CP latency in the RAN, UE UP buffer queuing delay, etc.
- UL retransmission ratio, e.g., for HARQ or RLC.
- UL packet loss ratio, transmission reliability performance indicators, etc.
- UL LBT/CCA failure statistics measured by the UE.
- UL RSRP, RSRQ, RSSI, SINR, SIR, etc. measured by the gNB and provided to the UE.

In other embodiments, the UE can select the CG resource for UL transmission that provides the highest UL bit rate and/or the shortest PUSCH transmission duration (e.g., highest capacity modulation and coding scheme, MCS). In other embodiments, the UE can select the CG resource for UL transmission that provides highest transmission reliability (e.g., most reliable MCS).

In some embodiments, the network (e.g., gNB) can configure each UE to use one or more of the above selection criteria via dedicated RRC signaling, MAC CE, or DCI. In other embodiments, the network can broadcast system information (SI) that indicates which of the selection criteria should be used by UEs in the cell.

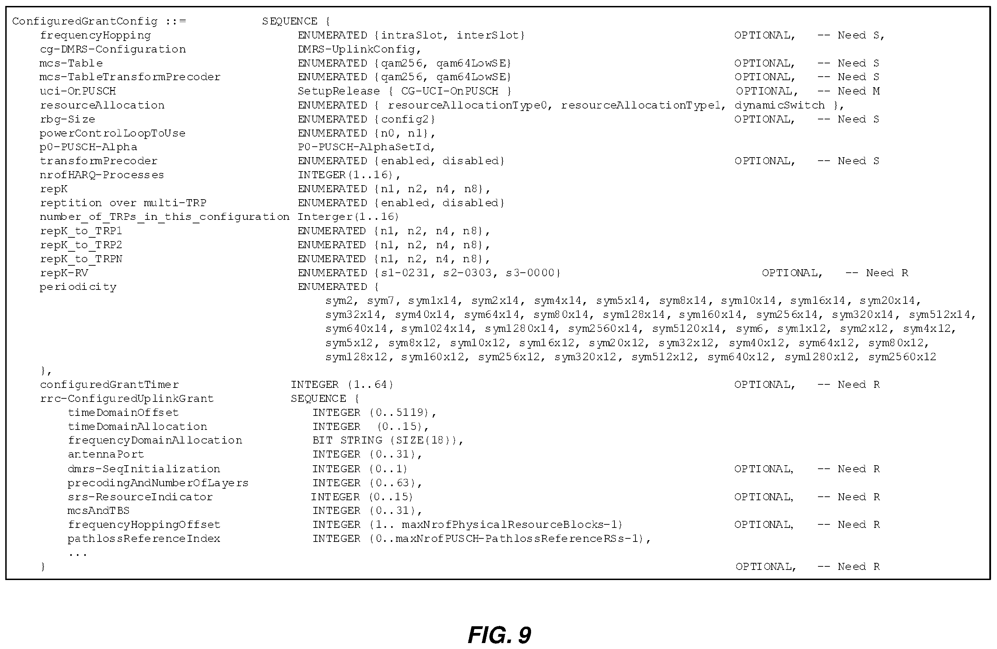

In some embodiments, the exemplary ASN.1 data structure for a *ConfiguredGrantConfig* IE shown in Figure 7 can be enhanced by including additional parameters that facilitate mapping between TB repetitions and TRPs. Figure 9 shows an exemplary ASN.1 data structure for a *ConfiguredGrantConfig* IE according to these embodiments. In particular, the data structure shown in Figure 9 provides enhancements to the portion of the data structure shown in Figure 7A and can be used together with the portion of the data structure shown in Figure 7B. These enhancements are indicated by the dashed box.

The enhancements shown in Figure 9 include a *number_of_TRPs_in_this_configuration* (referred to as $N_{TRP}$ for short) and the parameters *repK ro TRPi,* where *i = 1 ... $N_{TRP}$*. Each of these terms can take on values of {1, 2, 4, 8} similar to *repK* discussed above, and indicates the number of TB repetitions mapped to TRPi.

According to a second group of embodiments, a UE is configured with one or more UL CG configurations that include, contain, and/or are associated with a set of CG resources across multiple TRPs. Each of these can be referred to as a "multi-TRP configuration." For example, the CG resources comprising an UL CG configuration may be associated with different TRPs, e.g., TRPi, where i=1...N. In addition, for each time-domain transmission occasion associated with an UL CG, there may be multiple CG resources in the frequency domain (e.g., that overlap in time). According to various embodiments described below, the UE can use various techniques to select CG resources to be used for retransmissions of TBs, e.g., towards another TRP than for the initial transmission.

In some embodiments, if autonomous retransmission is triggered upon expiry of a timer and the UE has not received explicit or implicit positive HARQ feedback from the gNB, the UE can select the same UL CG configuration for retransmission as used for initial transmission (e.g., transmitting to the same TRP) or a different UL CG configuration. In some embodiments, the network can configure (e.g., via RRC signaling) whether the UE should use the same or different UL CG configuration in this scenario.

In some embodiments, an UL CG configuration may include an indication (e.g., in an IE field) of whether TB repetition is allowed and/or the number of repetitions allowed. For example, the UE can base its selection of UL CG configurations on this indication and the degree of reliability needed for the particular TB.

In some embodiments, a UE may perform multiple retransmissions or repetitions of a TB using different frequency resources that overlap in time (e.g., at the same transmission occasion). By performing multiple retransmissions simultaneously, the latency for receiving HARQ A/N from the gNB can be reduced as compared to transmitting them sequentially (e.g., with no intermediate responses).

In some embodiments, the UE can apply any of the same criteria discussed above (e.g., with respect to the first group) for selecting a CG resource to be used for a retransmission or repetition of a TB. For example, the UE is configured with first and second UL CG configurations and selects a CG resource of the first UL CG configuration for initial transmission according to the above-described criteria. Subsequently, the UE can select a different CG resource in the second UL CG configuration for retransmission or repetition of the same TB.

In some embodiments, a UE is configured with a plurality of UL CG configurations, each of which includes a set of periodic CG resources associated with one of a plurality of TRPs. Using the above example of two UL CG configurations and two TRPs, a first UL CG configurations can include periodic CG resources associated with a first TRP and a second UL CG configuration can include periodic CG resources associated with a second TRP. As such, the UE can select a CG resource of the first UL CG configuration for initial transmission towards the first TRP, and select a different CG resource in the second UL CG configuration for retransmission or repetition of the same TB towards the second TRP.

In some embodiments, multiple PUSCH repetitions can be transmitted towards multiple TRPs at the same time or at different (i.e., non-overlapping) times. The PUSCH can be associated with a dynamic UL grant via DCI, or with an UL CG. As such, these transmissions (repetitions) over multiple-TRPs can belong to the same HARQ process or to different HARQ processes or sub-HARQ processes. Note for a single HARQ process, repetitions associated with different TRPs can be considered as separate sub-HARQ processes, and the gNB combines transmissions for these sub-HARQ processes to derive a single transmission for the HARQ process.

In some embodiments, for CGs not associated with a DCI, PUSCH repetitions toward multiple TRPs can be associated with a single CG or different CGs (e.g., each TRP associated with a separate CG). In some embodiments, PUSCH repetitions toward multiple TRPs can be aligned or non-aligned in time. To make transmissions or repetitions aligned, the gNB or UE can trigger processes in an aperiodic or periodic manner to make a secondary TRP aligned or synchronized with respect to a primary TRP.

In some embodiments, UL CG transmissions toward multiple TRPs can be activated with a DCI from a single TRP. This DCI can provide necessary information for CG allocation over multiple TRPs associated with a single CG or different CGs (e.g., each TRP associated with a separate CG). In other embodiments, UL CG transmissions toward multiple TRPs can be activated with multiple DCIs, with each DCI associated with a different UL CG and each UL CG associated with a different TRP.

As an illustrative example, a UE is configured with two different multi-TRP UL CG configurations (e.g., for TRPs 1 and 2), both of which include K=4 TB repetitions. Configuration 1 (C1) includes four TB repetitions to TRP1 and zero repetitions to TRP2, while C2 includes two repetitions to TRP1 and two repetitions to TRP2. Data for UL transmission may arrive at the UE (e.g., provided by a user or an application) at different times relative to UL transmission occasions available to the UE.

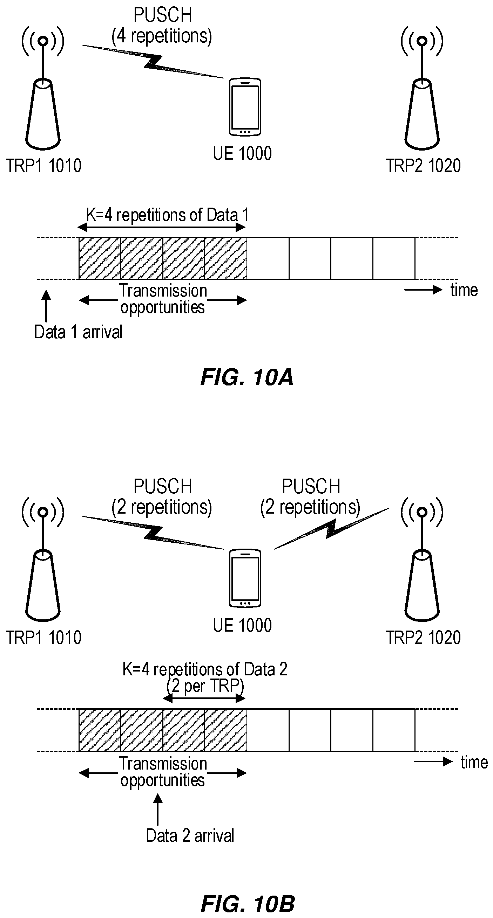

Figures 10A-B illustrate selection of UL CG configuration based on UL data arrival relative to transmission occasions. In particular, Figure 10A shows a case where data 1 arrives prior to four transmission occasions available to the UE (1030). In this case, the UE selects C1 and transmits four repetitions to TRP1 (1010) during the respective transmission occasions. In contrast, Figure 10B shows a case where data 2 arrives near the end of the second available transmission occasion, such that the UE only has two transmission occasions remaining. In this case, the UE selects C2 and transmits one repetition to each of TRP1 (1010) and TRP2 (1020) during each of the two remaining transmission occasions, for a total of K=4 repetitions.

In the context of the above example, if only one repetition is configured (i.e., K=1), the UE can select the UL CG configuration that includes CG resources for the TRP (e.g., 1 or 2) having the better radio channel quality towards the UE. This can be determined based on any of the metrics discussed above.

In some embodiments, selection and configuration of which TRPs to use to may depend on the respective loads of the TRPs and/or interference created by transmission towards the respective TRPs. In such case, the selection of TRPs may be based on the geographical distribution of UEs in the cell.

Although the above description focused on UL transmission using UL CGs, the same principles can be applied to DL transmissions based on semi-persistent scheduling (SPS). Furthermore, the same principles can be applied to dynamic UL grants that include repetitions.

Carrier aggregation (CA) was introduced in LTE Rel-10 to facilitate support for bandwidths larger than 20 MHz while remaining backward compatible with LTE Rel-8. In CA, a wideband LTE carrier (e.g., wider than 20 MHz) appears as multiple carriers (also referred to as "component carriers" or "CCs") to a UE. Each CC can also be referred to as a "cell", and the UE's full set of CCs can be considered a "cell group". In CA operation a UE is always assigned a primary cell (PCell, as a main serving cell) and may optionally be assigned one or more secondary cells (SCells). CA is also used in 5G/NR.

Although the above description focused on UL transmission to multiple TRPs, the same principles can be applied to selection between configurations that are associated with UL transmissions to multiple cells or on multiple CCs arranged in CA. In other words, rather than selecting a multi-TRP configuration according to various criteria, the UE can select a multi-cell or multi-carrier configuration according to the same or different criteria.

In some embodiments, different UEs may have different capabilities for selecting among configured UL CGs according to the above principles. UEs may signal these capabilities to the network, which can then take them into consideration when providing UL CGs to such UEs.

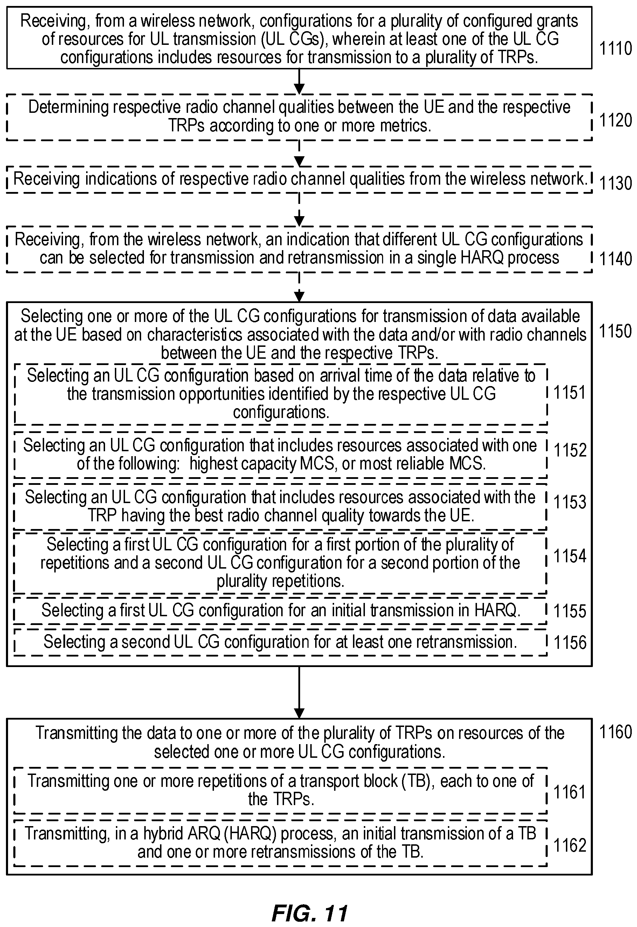

The embodiments described above are further illustrated with reference to Figures 11-12, which depict exemplary methods for a UE and a network node, respectively. In other words, various features of the operations described below with reference to Figures 11-12 correspond to various embodiments described above. Furthermore, the exemplary methods shown in Figures 11-12 can also be used cooperatively to provide various benefits, advantages, and/or solutions described herein. Although Figures 11-12 show specific blocks in particular orders, the operations of the respective methods can be performed in different orders than shown and can be combined and/or divided into blocks having different functionality than shown. Optional blocks or operations are indicated by dashed lines.

More specifically, Figure 11 is a flow diagram illustrating an exemplary method (e.g., procedure) for UL transmission of data to a plurality of TRPs in a wireless network, according to various exemplary embodiments of the present disclosure. The exemplary method shown in Figure 11 can be implemented by a UE (e.g., wireless device, IoT device, etc.) such as described herein with reference to other figures.

The exemplary method can include operations of block 1110, where the UE can receive, from the wireless network, configurations for a plurality of configured grants of resources for UL transmission (UL CGs). At least one of the UL CG configurations can include resources for transmission to a plurality of TRPs. The exemplary method can also include operations of block 1150, where the UE can select one or more of the UL CG configurations for transmission of data available at the UE based on characteristics of the data and/or of radio channels between the UE and the respective TRPs. The exemplary method can also include operations of block 1160, where the UE can transmit the data to one or more of the plurality of TRPs on resources of the selected one or more UL CG configurations.

In some embodiments, the characteristics associated with the radio channel include radio channel quality. In such embodiments, the exemplary method can also include the operations of block 1120 or block 1130. In block 1120, the UE can determine respective radio channel qualities between the UE and the respective TRPs according to one or more of the following metrics: reference signal received power (RSRP), reference signal received quality (RSRQ), signal-to-interference-plus-noise ratio (SINR), signal-to-interference ratio (SIR), received signal strength (RSSI), retransmission ratio, packet loss ratio, channel occupancy, listen-before-talk (LBT) failures, and clear channel assessment (CCA) failures. Alternately, in block 1130, the UE can receive indications of the respective radio channel qualities from the wireless network. The received indications can be for any of the metrics used in block 1120, or different metrics.

In some embodiments, the characteristics associated with the radio channel can include latency characteristics. In some embodiments, the characteristics associated with the data can include amount, arrival rate, arrival time, type of service, latency requirements, and reliability requirements.

In some embodiments, each UL CG configuration identifies a plurality of transmission opportunities. In such embodiments, the selecting operations of block 1150 can include the operations of sub-block 1151, where the UE can select an UL CG configuration based on arrival time of the data relative to the transmission opportunities identified by the respective UL CG configurations. Figure 10 illustrates two examples of these embodiments.

In some embodiments, the resources of the UL CGs can be associated with respective modulation and coding schemes (MCS). In such embodiments, the selecting operations of block 1150 can include the operations of sub-block 1152, where the UE can select an UL CG configuration that includes resources associated with one of the following: highest capacity MCS, or most reliable MCS.

In some embodiments, the data comprises a transport block (TB). In such embodiments, each UL CG configuration identifies a particular number of TRPs and respective numbers of repetitions of the TB to be transmitted to the respective ones of the particular number of TRPs. Figure 9 illustrates an example of such embodiments, i.e., a *configuredGrantConfig* IE that includes such information.

In some of these embodiments, the one or more repetitions are a single repetition, i.e., a single repetition is transmitted in block 1160. In such embodiments, the selecting operations of block 1150 can include the operations of sub-block 1153, where the UE can select an UL CG configuration that includes resources associated with the TRP having the best radio channel quality towards the UE. In such embodiments, the transmitting operations of block 1160 can include the operations of sub-block 1161, where the UE can transmit the single repetition of the TB to the TRP having the best radio channel quality towards the UE.

In other of these embodiments, the one or more repetitions include a plurality of repetitions. In such embodiments, first and second UL CG configurations are selected (e.g., in block 1150) and the transmitting operations of block 1160 can include the operations of sub-blocks 1162-1163. In sub-block 1162, the UE can transmit a first portion of the plurality of repetitions on resources of the first UL CG configuration. In sub-block 1163, the UE can transmit a second portion of the plurality of repetitions on resources of the second UL CG configuration.

In other of these embodiments, the plurality of UL CG configurations can include a first UL CG configuration that identifies a first TRP to which all repetitions of the TB are transmitted, and a second UL CG configuration that identifies the first TRP and a first number of repetitions and a second TRP and a second number of repetitions. In such embodiments, the transmitting operations of block 1160 include the operations of sub-blocks 1164 or 1165. In sub-block 1164, when the first UL CG configuration is selected (e.g., in block 1150), the UE transmits respective repetitions of the TB to the first TRP in respective transmission opportunities. In sub-block 1165, when the second UL CG configuration is selected (e.g., in block 1150), the UE transmits at least one of the first number of repetitions to the first TRP concurrently with at least one of the second number of repetitions to the second TRP in one or more of the transmission opportunities.

As a more detailed example of such embodiments, one of the following first conditions applies for each of the one or more transmission opportunities: a single repetition of the first number is transmitted to the first TRP; or a plurality of the first number are transmitted to the first TRP in a respective plurality of frequency regions. In addition, one of the following second conditions applies for each of the one or more transmission opportunities: a single repetition of the second number is transmitted to the second TRP; or a plurality of the second number are transmitted to the second TRP in the respective plurality of frequency regions.

In some embodiments, the data comprises a transport block (TB) associated with a HARQ process. In such embodiments, first and second UL CG configurations are selected and the transmitting operations of block 1160 can include the operations of sub-blocks 1166-1167. In sub-block 1166, the UE can transmit an initial transmission of the TB on resources of the first UL CG configuration. In sub-block 1167, the UE can transmit at least one retransmission of the TB on resources of the second UL CG configuration.

In some of these embodiments, the resources of the first UL CG configuration are associated with a first TRP and the resources of the second UL CG configuration are associated with a second TRP. In this manner, the initial transmission (e.g., in sub-block 1166) and the at least one retransmission (e.g., in sub-block 1167) will be transmitted to different TRPs.

In some of these embodiments, the exemplary method can also include the operations of block 1140, where the UE can receive, from the wireless network, an indication that different UL CG configurations can be selected for transmission and retransmission in a single HARQ process. In such embodiments, the selection of the second UL CG configuration (e.g., in block 1150) can be based on this indication.

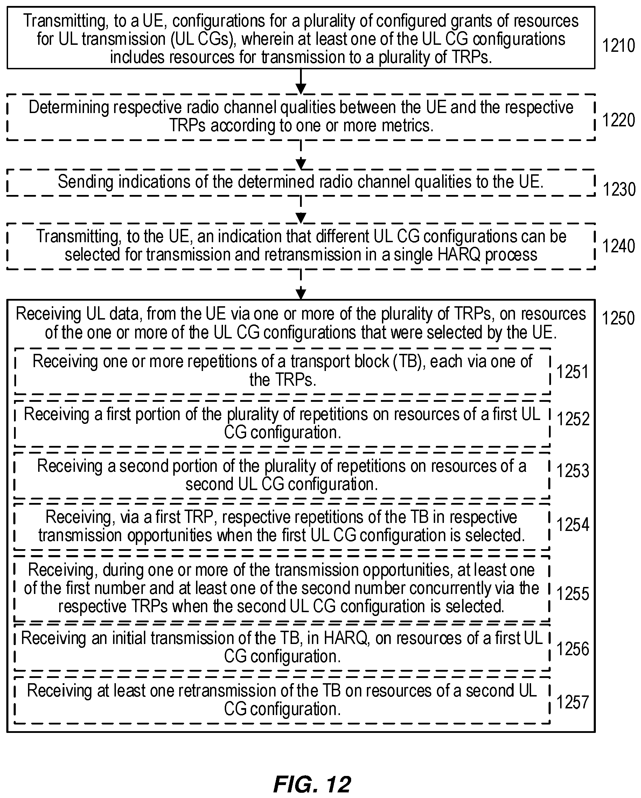

In addition, Figure 12 is a flow diagram illustrating an exemplary method (e.g., procedure) of receiving UL transmission of data via a plurality of TRPs in a wireless network, according to various exemplary embodiments of the present disclosure. The exemplary method shown in Figure 12 can be implemented by a network node *(e.g.,* base station, eNB, gNB, *etc.,* or components thereof) in communication with a UE via the plurality of TRPs in the wireless network (e.g., E-UTRAN, NG-RAN), such as by network nodes described herein with reference to other figures.

The exemplary method can include operations of block 1210, where the network node can transmit, to a UE, configurations for a plurality of configured grants of resources for UL transmission (UL CGs). At least one of the UL CG configurations can include resources for UE transmission to a plurality of TRPs. The exemplary method can also include operations of block 1250, where the network node can receive UL data, from the UE via one or more of the plurality of TRPs, on resources of the one or more of the UL CG configurations that were selected by the UE, e.g., in any of the ways described above.

In some embodiments, the exemplary method can also include the operations of blocks 1220-1230. In block 1220, the network node can determine respective radio channel qualities between the UE and the respective TRPs according to one or more of the following metrics: reference signal received power (RSRP), reference signal received quality (RSRQ), signal-to-interference-plus-noise ratio (SINR), signal-to-interference ratio (SIR), received signal strength (RSSI), retransmission ratio, packet loss ratio, channel occupancy, listen-before-talk (LBT) failures, and clear channel assessment (CCA) failures. In block 1230, the network node can send indications of the determined radio channel qualities to the UE.

In some embodiments, each UL CG configuration identifies a plurality of transmission opportunities. In such embodiments, the selected UL CG (e.g., by the UE in relation to the data received in block 1250) is related to arrival time of the data at the UE relative to the transmission opportunities identified by the respective UL CG configurations. Figure 10 illustrates two examples of these embodiments.

In some embodiments, the resources of the UL CGs can be associated with respective MCS. In such embodiments, the selected UL CG (e.g., by the UE in relation to the data received in block 1250) includes resources associated with one of the following: highest capacity MCS, or most reliable MCS.

In some embodiments, the data comprises a transport block (TB). In such embodiments, each UL CG configuration identifies a particular number of TRPs and respective numbers of repetitions of the TB to be transmitted by the UE to respective ones of the particular number of TRPs. Figure 9 illustrates an example of such embodiments, i.e., a *configuredGrantConfig* IE that includes such information.

In some of these embodiments, the one or more repetitions are a single repetition. In such embodiments, the receiving operations of block 1250 can include the operations of sub-block 1251, where the network node can receive the single repetition of the TB via the TRP having the best radio channel quality towards the UE (e.g., as selected by the UE).

In other of these embodiments, the one or more repetitions include a plurality of repetitions. In such embodiments, the receiving operations of block 1250 can include the operations of sub-blocks 1252-1253, where the network node can receive a first portion of the plurality of repetitions on resources of a first UL CG configuration and receive a second portion of the plurality of repetitions on resources of a second UL CG configuration.

In other of these embodiments, the plurality of UL CG configurations can include a first UL CG configuration that identifies a first TRP to which all repetitions are transmitted, and a second UL CG configuration that identifies the first TRP and a first number of repetitions and a second TRP and a second number of repetitions. In such embodiments, the receiving operations of block 1250 can include the operations of sub-blocks 1254 or 1255. In sub-block 1254, when the first UL CG configuration is selected, the network node can receive respective repetitions of the TB via the first TRP in respective transmission opportunities. In sub-block 1255, when the second UL CG configuration is selected, the network node can receive at least one of the first number of repetitions via the first TRP concurrently with at least one of the second number of repetitions via the second TRP in one or more of the transmission opportunities.

As a more detailed example of such embodiments, one of the following first conditions applies for each of the one or more transmission opportunities: a single repetition of the first number is received via the first TRP; or a plurality of the first number are received via the first TRP in a respective plurality of frequency regions. In addition, one of the following second conditions applies for each of the one or more transmission opportunities: a single repetition of the second number is received via the second TRP; or a plurality of the second number are received via the second TRP in the respective plurality of frequency regions.

In some embodiments, the data comprises a transport block (TB) associated with a hybrid ARQ (HARQ) process. In such embodiments, the receiving operations of block 1250 can include one or more of the operations of sub-blocks 1256-1257. In sub-block 1256, the network node can receive an initial transmission of the TB on resources of first UL CG configuration. In sub-block 1257, the network node can receive at least one retransmission of the TB on resources of the second UL CG configuration. For example, the initial transmission may or may not be received (e.g., due to prevailing channel conditions), but any reception will be on resources of the first UL CG configuration. Similarly, the retransmission(s) may or may not be received (e.g., due to prevailing channel conditions), but any reception will be on resources of the second UL CG configuration.

In some of these embodiments, the resources of the first UL CG configuration are associated with a first TRP and the resources of the second UL CG configuration are associated with a second TRP. In this manner, the initial transmission and the at least one retransmission can be received via different TRPs (e.g., in sub-blocks 1256-1257).

In some embodiments, the exemplary method can also include the operations of block 1240, where the network node can transmit, to the UE, an indication that different UL CG configurations can be selected for transmission and retransmission in a single HARQ process. In such embodiments, the reception on resources of the second UL CG configuration in sub-block 1257 can be based on this indication.

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

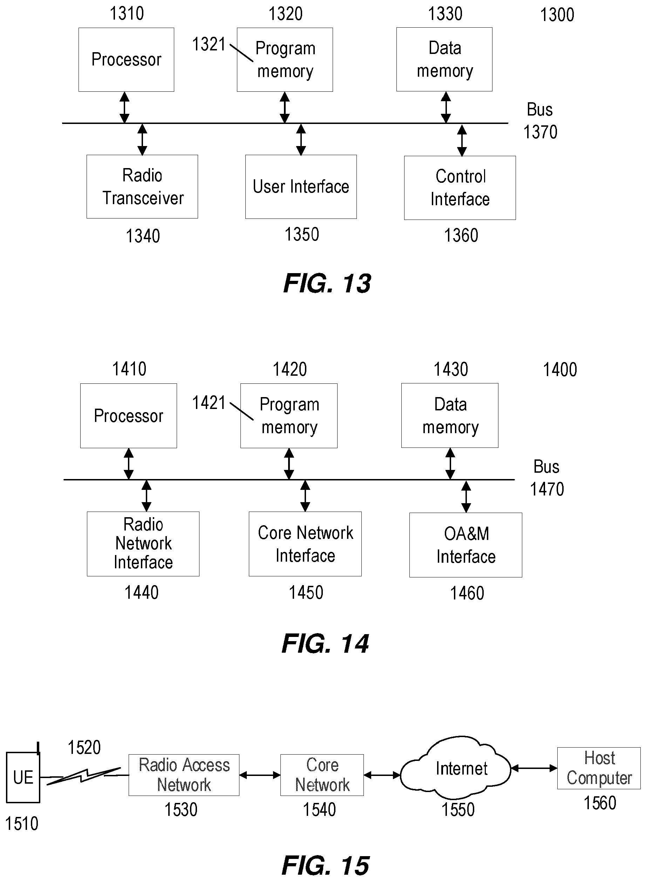

Figure 13 shows a block diagram of an exemplary wireless device or user equipment (UE) configurable according to various exemplary embodiments of the present disclosure, including by execution of instructions on a computer-readable medium that correspond to, or comprise, any of the exemplary methods and/or procedures described above. For simplicity, the exemplary wireless device or UE will be referred to as "device 1300" in the following description.

Exemplary device 1300 can comprise a processor 1310 that can be operably connected to a program memory 1320 and/or a data memory 1330 via a bus 1370 that can comprise parallel address and data buses, serial ports, or other methods and/or structures known to those of ordinary skill in the art. Program memory 1320 can store software code, programs, and/or instructions (collectively shown as computer program product 1321 in Figure 13) executed by processor 1310 that can configure and/or facilitate device 1300 to perform various operations, including operations described below. For example, execution of such instructions can configure and/or facilitate exemplary device 1300 to communicate using one or more wired or wireless communication protocols, including one or more wireless communication protocols standardized by 3GPP, 3GPP2, or IEEE, such as those commonly known as 5G/NR, NR-U, LTE, LTE-A, LTE LAA/e-LAA/feLAA, UMTS, HSPA, GSM, GPRS, EDGE, 1xRTT, CDMA2000, 802.11 WiFi, HDMI, USB, Firewire, *etc.,* or any other current or future protocols that can be utilized in conjunction with radio transceiver 1340, user interface 1350, and/or host interface 1360.

As another example, processor 1310 can execute program code stored in program memory 1320 that corresponds to MAC, RLC, PDCP, and RRC layer protocols standardized by 3GPP *(e.g.,* for NR and/or LTE). As a further example, processor 1310 can execute program code stored in program memory 1320 that, together with radio transceiver 1340, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA).

Program memory 1320 can also comprises software code executed by processor 1310 to control the functions of device 1300, including configuring and controlling various components such as radio transceiver 1340, user interface 1350, and/or host interface 1360. Program memory 1320 can also comprise one or more application programs and/or modules comprising computer-executable instructions embodying any of the exemplary methods and/or procedures described herein. Such software code can be specified or written using any known or future developed programming language, such as *e.g.,* Java, C++, C, Objective C, HTML, XHTML, machine code, and Assembler, as long as the desired functionality, e.g., as defined by the implemented method steps, is preserved. In addition, or as an alternative, program memory 1320 can comprise an external storage arrangement (not shown) remote from device 1300, from which the instructions can be downloaded into program memory 1320 located within or removably coupled to device 1300, so as to enable execution of such instructions.

Data memory 1330 can comprise memory area for processor 1310 to store variables used in protocols, configuration, control, and other functions of device 1300, including operations corresponding to, or comprising, any of the exemplary methods and/or procedures described herein. Moreover, program memory 1320 and/or data memory 1330 can comprise non-volatile memory (e.g., flash memory), volatile memory (e.g., static or dynamic RAM), or a combination thereof. Furthermore, data memory 1330 can comprise a memory slot by which removable memory cards in one or more formats (e.g., SD Card, Memory Stick, Compact Flash, etc.) can be inserted and removed. Persons of ordinary skill in the art will recognize that processor 1310 can comprise multiple individual processors (including, e.g., multi-core processors), each of which implements a portion of the functionality described above. In such cases, multiple individual processors can be commonly connected to program memory 1320 and data memory 1330 or individually connected to multiple individual program memories and or data memories. More generally, persons of ordinary skill in the art will recognize that various protocols and other functions of device 1300 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

A radio transceiver 1340 can comprise radio-frequency transmitter and/or receiver circuitry that facilitates the device 1300 to communicate with other equipment supporting like wireless communication standards and/or protocols. In some exemplary embodiments, the radio transceiver 1340 includes a transmitter and a receiver that enable device 1300 to communicate with various 5G/NR networks according to various protocols and/or methods proposed for standardization by 3GPP and/or other standards bodies. For example, such functionality can operate cooperatively with processor 1310 to implement a PHY layer based on OFDM, OFDMA, and/or SC-FDMA technologies, such as described herein with respect to other figures.

In some exemplary embodiments, radio transceiver 1340 includes an LTE transmitter and receiver that can facilitate device 1300 to communicate with various LTE, LTE-Advanced (LTE-A), and/or NR networks according to standards promulgated by 3GPP. In some exemplary embodiments, radio transceiver 1340 includes circuitry, firmware, etc. necessary for the device 1300 to communicate with various 5G/NR, LTE, LTE-A, UMTS, and/or GSM/EDGE networks, also according to 3GPP standards. In some exemplary embodiments of the present disclosure, radio transceiver 1340 includes circuitry, firmware, etc. necessary for the device 1300 to communicate with various CDMA2000 networks, according to 3GPP2 standards.

In some exemplary embodiments of the present disclosure, the radio transceiver 1340 is capable of communicating using radio technologies that operate in unlicensed frequency bands, such as IEEE 802.11 WiFi that operates using frequencies in the regions of 2.4, 5.6, and/or 60 GHz. In some exemplary embodiments, radio transceiver 1340 can include circuitry, firmware, etc. necessary for the device 1300 to communicate using cellular protocols in unlicensed or shared spectrum, e.g., via NR-U, LTE LAA/eLAA/feLAA, MulteFire, etc.

In some exemplary embodiments of the present disclosure, radio transceiver 1340 can comprise a transceiver that is capable of wired communication, such as by using IEEE 802.3 Ethernet technology.

The functionality of radio transceiver 1340 specific to each of these embodiments can be coupled with and/or controlled by other circuitry in the device 1300, such as the processor 1310 executing program code stored in program memory 1320 in conjunction with, or supported by, data memory 1330.

User interface 1350 can take various forms depending on the particular embodiment of device 1300 or can be absent from device 1300 entirely. In some exemplary embodiments, user interface 1350 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the device 1300 can comprise a tablet computing device including a larger touchscreen display. In such embodiments, one or more of the mechanical features of the user interface 1350 can be replaced by comparable or functionally equivalent virtual user interface features (e.g., virtual keypad, virtual buttons, etc.) implemented using the touchscreen display, as familiar to persons of ordinary skill in the art. In other embodiments, the device 1300 can be a digital computing device, such as a laptop computer, desktop computer, workstation, etc. that comprises a mechanical keyboard that can be integrated, detached, or detachable depending on the particular exemplary embodiment. Such a digital computing device can also comprise a touch screen display. Many exemplary embodiments of the device 1300 having a touch screen display are capable of receiving user inputs, such as inputs related to exemplary methods and/or procedures described herein or otherwise known to persons of ordinary skill in the art.

In some exemplary embodiments of the present disclosure, device 1300 can comprise an orientation sensor, which can be used in various ways by features and functions of device 1300. For example, the device 1300 can use outputs of the orientation sensor to determine when a user has changed the physical orientation of the device 1300's touch screen display. An indication signal from the orientation sensor can be available to any application program executing on the device 1300, such that an application program can change the orientation of a screen display (*e.g.,* from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1360 of the device 1300 can take various forms depending on the particular exemplary embodiment of device 1300 and of the particular interface requirements of other devices that the device 1300 is intended to communicate with and/or control. For example, the control interface 1360 can comprise an RS-232 interface, an RS-485 interface, a USB interface, an HDMI interface, a Bluetooth interface, an IEEE ("Firewire") interface, an I²C interface, a PCMCIA interface, or the like. In some exemplary embodiments of the present disclosure, control interface 1360 can comprise an IEEE 802.3 Ethernet interface such as described above. In some exemplary embodiments of the present disclosure, the control interface 1360 can comprise analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the device 1300 can comprise more functionality than is shown in Figure 13 including, for example, a video and/or still-image camera, microphone, media player and/or recorder, *etc.* Moreover, radio transceiver 1340 can include circuitry necessary to communicate using additional radio-frequency communication standards including Bluetooth, GPS, and/or others. Moreover, the processor 1310 can execute software code stored in the program memory 1320 to control such additional functionality. For example, directional velocity and/or position estimates output from a GPS receiver can be available to any application program executing on the device 1300, including various exemplary methods and/or computer-readable media according to various exemplary embodiments of the present disclosure.

Figure 14 shows a block diagram of an exemplary network node 1400 configurable according to various embodiments of the present disclosure, including those described above with reference to other figures. In some exemplary embodiments, network node 1400 can comprise a base station, eNB, gNB, or component thereof. Network node 1400 includes processor 1410 that is operably connected to program memory 1420 and data memory 1430 via bus 1470, which can comprise parallel address and data buses, serial ports, or other methods and/or structures known to those of ordinary skill in the art.

Program memory 1420 can store software code, programs, and/or instructions (collectively shown as computer program product 1421 in Figure 14) executed by processor 1410 that can configure and/or facilitate network node 1400 to perform various operations, including operations described below. For example, execution of such stored instructions can configure network node 1400 to communicate with one or more other devices using protocols according to various embodiments of the present disclosure, including one or more exemplary methods and/or procedures discussed above. Furthermore, execution of such stored instructions can also configure and/or facilitate network node 1400 to communicate with one or more other devices using other protocols or protocol layers, such as one or more of the PHY, MAC, RLC, PDCP, and RRC layer protocols standardized by 3GPP for NR, NR-U, LTE, LTE-A, LTE LAA/eLAA/ feLAA, or any other higher-layer protocols utilized in conjunction with radio network interface 1440 and core network interface 1450. By way of example and without limitation, core network interface 1450 can comprise the S1 interface and radio network interface 1450 can comprise the Uu interface, as standardized by 3GPP. Program memory 1420 can also include software code executed by processor 1410 to control the functions of network node 1400, including configuring and controlling various components such as radio network interface 1440 and core network interface 1450.

Data memory 1430 can comprise memory area for processor 1410 to store variables used in protocols, configuration, control, and other functions of network node 1400. As such, program memory 1420 and data memory 1430 can comprise non-volatile memory (e.g., flash memory, hard disk, *etc.),* volatile memory *(e.g.,* static or dynamic RAM), network-based *(e.g.,* "cloud") storage, or a combination thereof. Persons of ordinary skill in the art will recognize that processor 1410 can comprise multiple individual processors (not shown), each of which implements a portion of the functionality described above. In such case, multiple individual processors may be commonly connected to program memory 1420 and data memory 1430 or individually connected to multiple individual program memories and/or data memories. More generally, persons of ordinary skill in the art will recognize that various protocols and other functions of network node 1400 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1440 can comprise transmitters, receivers, signal processors, ASICs, antennas, beamforming units, and other circuitry that enables network node 1400 to communicate with other equipment such as, in some embodiments, a plurality of compatible user equipment (UE). In some exemplary embodiments, radio network interface 1440 can comprise various protocols or protocol layers, such as the PHY, MAC, RLC, PDCP, and RRC layer protocols standardized by 3GPP for NR, NR-U, LTE, LTE-A, and/or LTE LAA/eLAA/feLAA; improvements thereto such as described herein above; or any other higher-layer protocols utilized in conjunction with radio network interface 1440. According to further exemplary embodiments, the radio network interface 1440 can comprise a PHY layer based on OFDM, OFDMA, and/or SC-FDMA technologies. In some embodiments, the functionality of such a PHY layer can be provided cooperatively by radio network interface 1440 and processor 1410, possibly in conjunction with program code or computer program product 1421 in memory 1420.

Core network interface 1450 can comprise transmitters, receivers, and other circuitry that enables network node 1400 to communicate with other equipment in a core network such as, in some embodiments, circuit-switched (CS) and/or packet-switched Core (PS) networks. In some embodiments, core network interface 1450 can comprise the S1 interface standardized by 3GPP. In some exemplary embodiments, core network interface 1450 can comprise one or more interfaces to one or more SGWs, MMEs, SGSNs, GGSNs, and other physical devices that comprise functionality found in GERAN, UTRAN, E-UTRAN, and CDMA2000 core networks that are known to persons of ordinary skill in the art. In some embodiments, these one or more interfaces may be multiplexed together on a single physical interface. In some embodiments, lower layers of core network interface 1450 can comprise one or more of asynchronous transfer mode (ATM), Internet Protocol (IP)-over-Ethernet, SDH over optical fiber, T1/E1/PDH over a copper wire, microwave radio, integrated access backhaul (IAB), or other wired or wireless transmission technologies known to those of ordinary skill in the art.

OA&M interface 1460 can comprise transmitters, receivers, and other circuitry that enables network node 1400 to communicate with external networks, computers, databases, and the like for purposes of operations, administration, and maintenance of network node 1400 or other network equipment operably connected thereto. Lower layers of OA&M interface 1460 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1440, core network interface 1450, and OA&M interface 1460 may be multiplexed together on a single physical interface, such as the examples listed above.

Figure 15 is a block diagram of an exemplary communication network configured to provide over-the-top (OTT) data services between a host computer and a user equipment (UE), according to one or more exemplary embodiments of the present disclosure. UE 1510 can communicate with radio access network (RAN) 1530 over radio interface 1520, which can be based on protocols described above including, e.g., LTE, LTE-A, and 5G/NR. For example, UE 1510 can be configured and/or arranged as shown in other figures discussed above. RAN 1530 can include one or more network nodes (e.g., base stations, eNBs, gNBs, controllers, etc.) operable in licensed spectrum bands, as well one or more network nodes operable in unlicensed spectrum (using, e.g., LAA or NR-U technology), such as a 2.4-GHz band and/or a 5-GHz band. In such cases, the network nodes comprising RAN 1530 can cooperatively operate using licensed and unlicensed spectrum.

RAN 1530 can further communicate with core network 1540 according to various protocols and interfaces described above. For example, one or more apparatus (e.g., base stations, eNBs, gNBs, etc.) comprising RAN 1530 can communicate to core network 1540 via core network interface 1550 described above. In some exemplary embodiments, RAN 1530 and core network 1540 can be configured and/or arranged as shown in other figures discussed above. For example, eNBs comprising an E-UTRAN 1530 can communicate with an EPC core network 1540 via an S1 interface, such as illustrated in Figure 1. As another example, gNBs comprising a NR RAN 1530 can communicate with a 5GC core network 1530 via an NG interface, such as illustrated in Figures 3-4.

Core network 1540 can further communicate with an external packet data network, illustrated in Figure 15 as Internet 1550, according to various protocols and interfaces known to persons of ordinary skill in the art. Many other devices and/or networks can also connect to and communicate via Internet 1550, such as exemplary host computer 1560. In some exemplary embodiments, host computer 1560 can communicate with UE 1510 using Internet 1550, core network 1540, and RAN 1530 as intermediaries. Host computer 1560 can be a server (e.g., an application server) under ownership and/or control of a service provider. Host computer 1560 can be operated by the OTT service provider or by another entity on the service provider's behalf.

For example, host computer 1560 can provide an over-the-top (OTT) packet data service to UE 1510 using facilities of core network 1540 and RAN 1530, which can be unaware of the routing of an outgoing/incoming communication to/from host computer 1560. Similarly, host computer 1560 can be unaware of routing of a transmission from the host computer to the UE, e.g., the routing of the transmission through RAN 1530. Various OTT services can be provided using the exemplary configuration shown in Figure 15 including, e.g., streaming (unidirectional) audio and/or video from host computer to UE, interactive (bidirectional) audio and/or video between host computer and UE, interactive messaging or social communication, interactive virtual or augmented reality, etc.

The exemplary network shown in Figure 15 can also include measurement procedures and/or sensors that monitor network performance metrics including data rate, latency and other factors that are improved by exemplary embodiments disclosed herein. The exemplary network can also include functionality for reconfiguring the link between the endpoints (e.g., host computer and UE) in response to variations in the measurement results. Such procedures and functionalities are known and practiced; if the network hides or abstracts the radio interface from the OTT service provider, measurements can be facilitated by proprietary signaling between the UE and the host computer.

The exemplary embodiments described herein provide flexible and efficient techniques for a UE to select among a plurality of multi-TRP configurations available for transmission in relation to an UL CG based on various factors such as UL data for transmission at the UE, UE energy consumption, UL/DL radio channel conditions, etc. By selecting and utilizing multi-TRP configuration in this manner, the UE can reduce energy consumption and/or improve data transmission reliability and/or latency. When used in NR UEs *(e.g.,* UE 1510) and gNBs *(e.g.,* gNBs comprising RAN 1530), exemplary embodiments described herein can provide various improvements, benefits, and/or advantages that improve the performance of UEs and OTT data services as experienced by OTT service providers and end-users. These include more reliable UL data throughout and reduced UL latency without excessive UE power consumption or other reductions in user experience.

**Claims**

1. A method, for a user equipment, UE, of uplink, UL, transmission of data to a plurality of transmission reception points, TRPs, in a wireless network, the method comprising:

   receiving (1110), from the wireless network, configurations for a plurality of configured grants of resources for UL transmission, UL CGs, wherein at least one of the UL CG configurations includes resources for transmission to a plurality of TRPs;
   selecting (1150) one or more of the UL CG configurations for transmission of UL data available at the UE based on characteristics of at least one of the following: the UL data to be transmitted by the UE and radio channels between the UE and the respective TRPs; and
   transmitting (1160) the UL data to one or more of the plurality of TRPs on resources of the selected one or more UL CG configurations.

2. The method of claim 1, wherein:

   the characteristics associated with the radio channel include radio channel quality; and
   the method further comprises one of the following:

   determining (1120) respective radio channel qualities between the UE and the respective TRPs according to one or more of the following metrics:
   reference signal received power, RSRP; reference signal received quality, RSRQ; signal-to-interference-plus-noise ratio, SINR; signal-to-interference ratio, SIR; received signal strength, RSSI; retransmission ratio; packet loss ratio; channel occupancy; listen-before-talk, LBT, failures; and clear channel assessment, CCA, failures; or
   receiving (1130) indications of the respective radio channel qualities from the wireless network.

3. The method of any of claims 1-2, wherein the characteristics associated with the radio channel include latency.

4. The method of any of claims 1-3, wherein the characteristics associated with the UL data include amount, arrival rate, arrival time, type of service, latency requirements, and reliability requirements.

5. The method of claim 4, wherein:

   each UL CG configuration identifies a plurality of transmission opportunities; and
   selecting (1150) one or more UL CG configurations comprises selecting (1151) an UL CG configuration based on arrival time of the data relative to the transmission opportunities identified by the respective UL CG configurations.

6. The method of any of claims 1-5, wherein:

   the resources of the UL CGs are associated with respective modulation and coding schemes, MCS; and
   selecting (1150) one or more UL CG configurations comprises selecting (1152) an UL CG configuration that includes resources associated with one of the following: highest capacity MCS, or most reliable MCS.

7. The method of any of claims 1-6, wherein:

the UL data comprises a transport block, TB; and
each UL CG configuration identifies:

a particular number of TRPs, and
respective numbers of repetitions of the TB to be transmitted to respective ones of the particular number of TRPs,

8. The method of claim 7, wherein:

the one or more repetitions are a single repetitions;
selecting (1150) one or more UL CG configurations comprises selecting (1153) an UL CG configuration that includes resources associated with the TRP having the best radio channel quality towards the UE, and transmitting (1160) the UL data comprises transmitting (1161) the single repetitions of the TB to the TRP having the best radio channel quality towards the UE.

9. The method of claim 7, wherein:

the one or more repetitions include a plurality of repetitions; and
first and second UL CG configurations are selected; and
transmitting (1160) the UL data comprises:

transmitting (1162) a first portion of the plurality of repetitions on resources of the first UL CG configuration; and
transmitting (1163) a second portion of the plurality of repetitions on resources of the second UL CG configuration.

10. The method of claim 7, wherein the plurality of UL CG configurations include:

a first UL CG configuration that identifies a first TRP to which all repetitions are transmitted; and
a second UL CG configuration that identifies the first TRP and a first number of repetitions and identifies a second TRP and a second number of repetitions.

11. The method of claim 10, wherein transmitting (1160) the data comprises:

when the first UL CG configuration is selected, transmitting (1164) respective repetitions of the TB to the first TRP in respective transmission opportunities; and
when the second UL CG configuration is selected, transmitting (1165) at least one of the first number of repetitions to the first TRP concurrently with at least one of the second number of repetitions to the second TRP in one or more of the transmission opportunities.

12. The method of claim 11, wherein:

one of the following first conditions applies for each of the one or more transmission opportunities:

a single repetition of the first number is transmitted to the first TRP; or
a plurality of repetitions of the first number are transmitted to the first TRP in a respective plurality of frequency regions;

and one of the following second conditions applies for each of the one or more transmission opportunities:

a single repetition of the second number is transmitted to the second TRP; or
a plurality of repetitions of the second number are transmitted to the second TRP in the respective plurality of frequency regions.

13. The method of any of claims 1-6, wherein:

the UL data comprises a transport block, TB, associated with a hybrid ARQ, HARQ, process;
first and second UL CG configurations are selected; and

transmitting (1160) the UL data comprises:

transmitting (1166) an initial transmission of the TB on resources of the first UL CG configuration; and
transmitting (1167) at least one retransmission of the TB on resources of the second UL CG configuration.

14. The method of claim 13, further comprising receiving (1140), from the wireless network, an indication that different UL CG configurations can be selected for transmission and retransmission in a single HARQ process, wherein selecting the second UL CG configuration is based on the indication.

15. A user equipment, UE (305, 430, 530, 1030, 1300, 1510) configured for uplink, UL, transmission of UL data to a plurality of transmission reception points, TRPs (410, 420, 510, 520, 1010, 1020) part of a wireless network (399, 1530), the UE being further configured to perform operations corresponding to the methods of any of claims 1-14.


**Patentansprüche**

1. Verfahren, für eine Benutzereinrichtung, UE, von Uplink-Übertragung, UL-Übertragung von Daten an eine Vielzahl von Übertragungsempfangspunkten, TRPs, in einem drahtlosen Netz, wobei das Verfahren Folgendes umfasst:

Empfangen (1110), von dem drahtlosen Netz, von Konfigurationen für eine Vielzahl von konfigurierten Berechtigungen von Ressourcen für UL-Übertragung, UL-CGs, wobei zumindest eine der UL-CG-Konfigurationen Ressourcen zur Übertragung an eine Vielzahl von TRPs beinhaltet;
Auswählen (1150) von einer oder mehreren der UL-CG-Konfigurationen für Übertragung von UL-Daten, die an der UE verfügbar sind, basierend auf Eigenschaften von zumindest einem des Folgenden: den UL-Daten, die durch die UE und Funkkanäle zwischen der UE und den jeweiligen TRPs zu übertragen sind; und Übertragen (1160) der UL-Daten an einen oder mehrere aus der Vielzahl von TRPs auf Ressourcen der ausgewählten einen oder mehreren UL-CG-Konfigurationen.

2. Verfahren nach Anspruch 1, wobei:
die Eigenschaften assoziiert mit dem Funkkanal Funkkanalqualität beinhalten; und das Verfahren ferner eines des Folgenden umfasst:

Bestimmen (1120) von jeweiligen Funkkanalqualitäten zwischen der UE und den jeweiligen TRPs gemäß einer oder mehreren der folgenden Metriken: Referenzsignalempfangsleistung, RSRP; Referenzsignalempfangsqualität, RSRQ; Signal-Interferenz-plus-Rausch-Verhältnis, SINR; Signal-Interferenz-Verhältnis, SIR; Empfangssignalstärke, RSSI; Neuübertragungsverhältnis; Paketverlustverhältnis; Kanalbelegung; Listen-before-Talk-Fehlern, LBT-Fehlern; und Clear-Channel-Assessment-Fehlern, CCA-Fehlern; oder
Empfangen (1130) von Angaben der jeweiligen Funkkanalqualitäten von dem drahtlosen Netz.

3. Verfahren nach einem der Ansprüche 1-2, wobei die Eigenschaften assoziiert mit dem Funkkanal Latenz beinhalten.

4. Verfahren nach einem der Ansprüche 1-3, wobei die Eigenschaften assoziiert mit den UL-Daten Menge, Ankunftsrate, Ankunftszeit, Art von Dienst, Latenzanforderungen und Zuverlässigkeitsanforderungen beinhalten.

5. Verfahren nach Anspruch 4, wobei:

jede UL-CG-Konfiguration eine Vielzahl von Übertragungsgelegenheiten identifiziert; und
das Auswählen (1150) von einer oder mehreren UL-CG-Konfigurationen Auswählen (1151) einer UL-CG-Konfiguration basierend auf Ankunftszeit der Daten relativ zu den Übertragungsgelegenheiten, die durch die jeweiligen UL-CG-Konfigurationen identifiziert werden, umfasst.

6. Verfahren nach einem der Ansprüche 1-5, wobei:

die Ressourcen der UL-CGs mit jeweiligen Modulations- und Codierungsschemata, MCS, assoziiert sind; und
das Auswählen (1150) von einer oder mehreren UL-CG-Konfigurationen Auswählen (1152) einer UL-CG-Konfiguration umfasst, die Ressourcen assoziiert mit einem des Folgenden beinhaltet: MCS mit höchster Kapazität oder zuverlässigste MCS.

**7.** Verfahren nach einem der Ansprüche 1-6, wobei:

die UL-Daten einen Transportblock, TB, umfassen; und
jede UL-CG-Konfiguration Folgendes identifiziert:

eine bestimmte Anzahl von TRPs, und
jeweilige Anzahlen von Wiederholungen des TB, der an jeweilige aus der bestimmten Anzahl von TRPs zu übertragen ist,

**8.** Verfahren nach Anspruch 7, wobei:

die eine oder die mehreren Wiederholungen eine Einzelwiederholungen sind;
das Auswählen (1150) von einer oder mehreren UL-CG-Konfigurationen Auswählen (1153) einer UL-CG-Konfiguration, die Ressourcen assoziiert mit dem TRP mit der besten Funkkanalqualität zu der UE beinhaltet, umfasst, und
das Übertragen (1160) der UL-Daten Übertragen (1161) der Einzelwiederholungen des TB an den TRP mit der besten Funkkanalqualität zu der UE umfasst.

**9.** Verfahren nach Anspruch 7, wobei:

die eine oder die mehreren Wiederholungen eine Vielzahl von Wiederholungen beinhalten; und
erste und zweite UL-CG-Konfigurationen ausgewählt sind; und
das Übertragen (1160) der UL-Daten Folgendes umfasst:
Übertragen (1162) eines ersten Anteils der Vielzahl von Wiederholungen an Ressourcen der ersten UL-CG-Konfiguration; und Übertragen (1163) eines zweiten Anteils der Vielzahl von Wiederholungen an Ressourcen der zweiten UL-CG-Konfiguration.

**10.** Verfahren nach Anspruch 7, wobei die Vielzahl von UL-CG-Konfigurationen Folgendes beinhaltet:
eine erste UL-CG-Konfiguration, die einen ersten TRP identifiziert, an den alle Wiederholungen übertragen werden; und eine zweite UL-CG-Konfiguration, die den ersten TRP und eine erste Anzahl von Wiederholungen identifiziert und einen zweiten TRP und eine zweite Anzahl von Wiederholungen identifiziert.

**11.** Verfahren nach Anspruch 10, wobei das Übertragen (1160) der Daten Folgendes umfasst:

wenn die erste UL-CG-Konfiguration ausgewählt ist, Übertragen (1164) von jeweiligen Wiederholungen des TB an den ersten TRP in jeweiligen Übertragungsgelegenheiten; und
wenn die zweite UL-CG-Konfiguration ausgewählt ist, Übertragen (1165) von zumindest einer aus der ersten Anzahl von Wiederholungen an den ersten TRP gleichzeitig mit zumindest einer aus der zweiten Anzahl von Wiederholungen an den zweiten TRP in einer oder mehreren der Übertragungsgelegenheiten.

**12.** Verfahren nach Anspruch 11, wobei:
eine der folgenden ersten Bedingungen für jede von der einen oder den mehreren Übertragungsgelegenheiten gilt:

eine Einzelwiederholung der ersten Anzahl wird an den ersten TRP übertragen; oder
eine Vielzahl von Wiederholungen der ersten Anzahl wird an den ersten TRP in einer jeweiligen Vielzahl von Frequenzregionen übertragen;
und eine der folgenden zweiten Bedingungen für jede von der einen oder den mehreren Übertragungsgelegenheiten gilt:
eine Einzelwiederholung der zweiten Anzahl wird an den zweiten TRP übertragen; oder eine Vielzahl von Wiederholungen der zweiten Anzahl wird an den zweiten TRP in der jeweiligen Vielzahl von Frequenzregionen übertragen.

**13.** Verfahren nach einem der Ansprüche 1-6, wobei:

die UL-Daten einen Transportblock, TB, assoziiert mit einem Hybrid-ARQ-Prozess, HARQ-Prozess umfassen;
erste und zweite UL-CG-Konfigurationen ausgewählt sind; und
das Übertragen (1160) der UL-Daten Folgendes umfasst:
Übertragen (1166) einer anfänglichen Übertragung des TB an Ressourcen der ersten UL-CG-Konfiguration; und Übertragen (1167) von zumindest einer Neuübertragung des TB an Ressourcen der zweiten UL-CG-Konfiguration.

14. Verfahren nach Anspruch 13, ferner umfassend Empfangen (1140), von dem drahtlosen Netz, einer Angabe, dass verschiedene UL-CG-Konfigurationen für Übertragung und Neuübertragung in einem einzelnen HARQ-Prozess ausgewählt werden können, wobei das Auswählen der zweiten UL-CG-Konfiguration auf der Angabe basiert.

15. Benutzereinrichtung, UE (305, 430, 530, 1030, 1300, 1510), die zur Uplink-Übertragung, UL-Übertragung von UL-Daten an eine Vielzahl von Übertragungsempfangspunkten, TRPs (410, 420, 510, 520, 1010, 1020), die Teil eines drahtlosen Netzes (399, 1530) sind, konfiguriert ist, wobei die UE ferner dazu konfiguriert ist, Operationen durchzuführen, die den Verfahren nach einem der Ansprüche 1-14 entsprechen.

## Revendications

1. Procédé, pour un équipement utilisateur, UE, de transmission en liaison montante, UL, de données vers une pluralité de points de réception de transmission, TRP, dans un réseau sans fil, le procédé comprenant :

la réception (1110), à partir du réseau sans fil, de configurations pour une pluralité d'octrois de ressources configurés pour une transmission UL, UL CG, dans lequel au moins l'une des configurations d'UL CG inclut des ressources pour une transmission vers une pluralité de TRP ;
la sélection (1150) d'une ou plusieurs des configurations d'UL CG pour une transmission de données UL disponibles au niveau de l'UE sur la base de caractéristiques d'au moins l'un des éléments suivants : les données UL à transmettre par l'UE et des canaux radio entre l'UE et les TRP respectifs ; et
la transmission (1160) des données UL vers un ou plusieurs de la pluralité de TRP sur des ressources des une ou plusieurs configurations d'UL CG sélectionnées.

2. Procédé selon la revendication 1, dans lequel :
les caractéristiques associées au canal radio incluent une qualité de canal radio ; et le procédé comprend en outre l'une des étapes suivantes :

la détermination (1120) de qualités de canal radio respectives entre l'UE et les TRP respectifs selon une ou plusieurs des métriques suivantes : la puissance reçue du signal de référence, RSRP ; la qualité reçue du signal de référence, RSRQ ; le rapport signal sur interférence plus bruit, SINR ; le rapport signal sur interférence, SIR ; l'intensité du signal reçu, RSSI ; le taux de retransmission ; le taux de perte de paquets ;l'occupation du canal ; les échecs d'accès de type écouter avant de parler, LBT ; et les échecs d'évaluation de canal libre, CCA ; ou
la réception (1130) d'indications des qualités de canal radio respectives à partir du réseau sans fil.

3. Procédé selon l'une quelconque des revendications 1 à 2, dans lequel les caractéristiques associées au canal radio incluent la latence.

4. Procédé selon l'une quelconque des revendications 1 à 3, dans lequel les caractéristiques associées aux données UL incluent la quantité, le taux d'arrivée, l'heure d'arrivée, le type de service, des exigences de latence et des exigences de fiabilité.

5. Procédé selon la revendication 4, dans lequel :

chaque configuration d'UL CG identifie une pluralité d'opportunités de transmission ; et
la sélection (1150) d'une ou plusieurs configurations d'UL CG comprend la sélection (1151) d'une configuration d'UL CG sur la base de l'heure d'arrivée des données par rapport aux opportunités de transmission identifiées par les configurations d'UL CG respectives.

6. Procédé selon l'une quelconque des revendications 1 à 5, dans lequel :

les ressources des UL CG sont associées à des schémas de modulation et de codage respectifs, MCS ; et
la sélection (1150) d'une ou plusieurs configurations d'UL CG comprend la sélection (1152) d'une configuration d'UL CG qui inclut des ressources associées à l'un des éléments suivants : le MCS à capacité la plus élevée, ou le MCS le plus fiable.

**7.** Procédé selon l'une quelconque des revendications 1 à 6, dans lequel :

les données UL comprennent un bloc de transport, TB ; et
chaque configuration d'UL CG identifie :

un nombre particulier de TRP, et
des nombres respectifs de répétitions du TB à transmettre à des points respectifs du nombre particulier de TRP.

**8.** Procédé selon la revendication 7, dans lequel :

les une ou plusieurs répétitions sont une répétition unique ;
la sélection (1150) d'une ou plusieurs configurations d'UL CG comprend la sélection (1153) d'une configuration d'UL CG qui inclut des ressources associées au TRP ayant la meilleure qualité de canal radio vers l'UE, et
la transmission (1160) des données UL comprend la transmission (1161) de la répétition unique du TB au TRP ayant la meilleure qualité de canal radio vers l'UE.

**9.** Procédé selon la revendication 7, dans lequel :

les une ou plusieurs répétitions incluent une pluralité de répétitions ; et
des première et deuxième configurations d'UL CG sont sélectionnées ; et
la transmission (1160) des données UL comprend :

la transmission (1162) d'une première partie de la pluralité de répétitions sur des ressources de la première configuration d'UL CG ; et
la transmission (1163) d'une deuxième partie de la pluralité de répétitions sur des ressources de la deuxième configuration d'UL CG.

**10.** Procédé selon la revendication 7, dans lequel la pluralité de configurations d'UL CG inclut :

une première configuration d'UL CG qui identifie un premier TRP auquel toutes les répétitions sont transmises ; et
une deuxième configuration d'UL CG qui identifie le premier TRP et un premier nombre de répétitions et identifie un deuxième TRP et un deuxième nombre de répétitions.

**11.** Procédé selon la revendication 10, dans lequel la transmission (1160) des données comprend :

lorsque la première configuration d'UL CG est sélectionnée, la transmission (1164) de répétitions respectives du TB au premier TRP dans des opportunités de transmission respectives ; et
lorsque la deuxième configuration d'UL CG est sélectionnée, la transmission (1165) d'au moins l'une du premier nombre de répétitions au premier TRP simultanément avec au moins l'une du deuxième nombre de répétitions au deuxième TRP dans une ou plusieurs des opportunités de transmission.

**12.** Procédé selon la revendication 11, dans lequel :
l'une des premières conditions suivantes s'applique pour chacune des une ou plusieurs opportunités de transmission :

une répétition unique du premier nombre est transmise au premier TRP ; ou
une pluralité de répétitions du premier nombre sont transmises au premier TRP dans une pluralité respective de régions de fréquences ;
et l'une des deuxièmes conditions suivantes s'applique pour chacune des une ou plusieurs opportunités de transmission :
une répétition unique du deuxième nombre est transmise au deuxième TRP ; ou une pluralité de répétitions du deuxième nombre sont transmises au deuxième TRP dans la pluralité respective de régions de fréquences.

**13.** Procédé selon l'une quelconque des revendications 1 à 6, dans lequel :

les données UL comprennent un bloc de transport, TB, associé à un processus de demande de répétition automatique hybride, HARQ ;
des première et deuxième configurations d'UL CG sont sélectionnées ; et

la transmission (1160) des données UL comprend :

la transmission (1166) d'une transmission initiale du TB sur des ressources de la première configuration d'UL CG ;
et la transmission (1167) d'au moins une retransmission du TB sur des ressources de la deuxième configuration d'UL CG.

14. Procédé selon la revendication 13, comprenant en outre la réception (1140), à partir du réseau sans fil, d'une indication que différentes configurations d'UL CG peuvent être sélectionnées pour la transmission et la retransmission dans un seul processus HARQ, dans lequel la sélection de la deuxième configuration d'UL CG est basée sur l'indication.

15. Équipement utilisateur, UE (305, 430, 530, 1030, 1300, 1510) configuré pour une transmission en liaison montante, UL, de données UL vers une pluralité de points de réception de transmission, TRP (410, 420, 510, 520, 1010, 1020) faisant partie d'un réseau sans fil (399, 1530), l'UE étant en outre configuré pour réaliser des opérations correspondant aux procédés selon l'une quelconque des revendications 1 à 14.

**FIG. 1**

**FIG. 2**

**FIG. 3**

**FIG. 4**

**FIG. 5A**

**FIG. 5B**

EP 4 173 152 B1

FIG. 6

```
ConfiguredGrantConfig ::=              SEQUENCE {
    frequencyHopping                   ENUMERATED {intraSlot, interSlot}                                OPTIONAL,    -- Need S,
    cg-DMRS-Configuration              DMRS-UplinkConfig,
    mcs-Table                          ENUMERATED {qam256, qam64LowSE}                                  OPTIONAL,    -- Need S
    mcs-TableTransformPrecoder         ENUMERATED {qam256, qam64LowSE}                                  OPTIONAL,    -- Need S
    uci-OnPUSCH                        SetupRelease { CG-UCI-OnPUSCH }                                  OPTIONAL,    -- Need M
    resourceAllocation                 ENUMERATED { resourceAllocationType0, resourceAllocationType1, dynamicSwitch },
    rbg-Size                           ENUMERATED {config2}                                             OPTIONAL,    -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}                                   OPTIONAL,    -- Need S
    nrofHARQ-Processes                 INTEGER(1..16),
    repK                               ENUMERATED {n1, n2, n4, n8},
    repK-RV                            ENUMERATED {s1-0231, s2-0303, s3-0000}                           OPTIONAL,    -- Need R
    periodicity                        ENUMERATED {
                                           sym2, sym7, sym1x14, sym2x14, sym4x14, sym5x14, sym8x14, sym10x14, sym16x14, sym20x14,
                                           sym32x14, sym40x14, sym64x14, sym80x14, sym128x14, sym160x14, sym256x14, sym320x14, sym512x14,
                                           sym640x14, sym1024x14, sym1280x14, sym2560x14, sym5120x14, sym6, sym1x12, sym2x12, sym4x12,
                                           sym5x12, sym8x12, sym10x12, sym16x12, sym20x12, sym32x12, sym40x12, sym64x12, sym80x12,
                                           sym128x12, sym160x12, sym256x12, sym320x12, sym512x12, sym640x12, sym1280x12, sym2560x12
    },
    configuredGrantTimer               INTEGER (1..64)                                                  OPTIONAL,    -- Need R
    rrc-ConfiguredUplinkGrant          SEQUENCE {
        timeDomainOffset               INTEGER (0..5119),
        timeDomainAllocation           INTEGER   (0..15),
        frequencyDomainAllocation      BIT STRING (SIZE(18)),
        antennaPort                    INTEGER (0..31),
        dmrs-SeqInitialization         INTEGER (0..1)                                                   OPTIONAL,    -- Need R
        precodingAndNumberOfLayers     INTEGER (0..63),
        srs-ResourceIndicator          INTEGER (0..15)                                                  OPTIONAL,    -- Need R
        mcsAndTBS                      INTEGER (0..31),
        frequencyHoppingOffset         INTEGER (1.. maxNrofPhysicalResourceBlocks-1)                    OPTIONAL,    -- Need R
        pathlossReferenceIndex         INTEGER (0..maxNrofPUSCH-PathlossReferenceRSs-1),
        ...
    }                                                                                                   OPTIONAL,    -- Need R
```

**FIG. 7A**

```
[[
    cg-RetransmissionTimer-r16            INTEGER (1..64)                      OPTIONAL,     -- Need R
    cg-minDFI-Delay-r16                   INTEGER (1..ffsValue)                OPTIONAL,     -- Need R Upper limit 7 FFS
    cg-nrofPUSCH-InSlot-r16               INTEGER (1..ffsValue)                OPTIONAL,     -- Need R
    cg-nrofSlots-r16                      INTEGER (1..ffsValue)                OPTIONAL,     -- Need R
    cg-StartingFullBW-InsideCOT-r16       ENUMERATED {ffs}                     OPTIONAL,     -- Need R
    cg-StartingFullBW-OutsideCOT-r16      ENUMERATED {ffs}                     OPTIONAL,     -- Need R
    cg-StartingPartialBW-InsideCOT-r16    ENUMERATED {ffs}                     OPTIONAL,     -- Need R
    cg-StartingPartialBW-OutsideCOT-r16   ENUMERATED {ffs}                     OPTIONAL,     -- Need R
    cg-UCI-Multiplexing                   ENUMERATED {enabled}                 OPTIONAL,     -- Need R
    cg-COT-SharingOffset-r16              INTEGER (1..ffsValue)                OPTIONAL,     -- Need R
    betaOffsetCG-UCI-r16                  INTEGER (1..ffsValue)                OPTIONAL,     -- Need R
    cg-COT-SharingList-r16                SEQUENCE (SIZE (1..ffsValue)) OF CG-COT-Sharing-r16  OPTIONAL,   -- Need R
    harq-ProcID-Offset-r16                INTEGER (0..15)                      OPTIONAL,     -- Need M
    harq-ProcID-Offset2-r16               INTEGER (0..15)                      OPTIONAL,     -- Need M
    configuredGrantConfigIndex-r16        ConfiguredGrantConfigIndex-r16       OPTIONAL,     -- Need M
    configuredGrantConfigIndexMAC-r16     ConfiguredGrantConfigIndexMAC-r16    OPTIONAL,     -- Need M
    periodicityExt-r16                    INTEGER (1..5120)                    OPTIONAL,     -- Need M
    startingFromRV0-r16                   ENUMERATED {on, off}                 OPTIONAL,     -- Need M
    phy-PriorityIndex-r16                 ENUMERATED {p0, p1}                  OPTIONAL,     -- Need M
    autonomousReTx-r16                    ENUMERATED {enabled}                 OPTIONAL      -- Cond LCH-BasedPrioritization
]]
}
```

**FIG. 7B**

EP 4 173 152 B1

Initial transmission of TB
for HARQ process m
using CG resource;
CGT and CGRT started

CGRT expiration triggers
retransmission of TB for
HARQ process m using
CG resource;
CGRT restarted

CGRT expiration triggers
retransmission of TB for
HARQ process m using
CG resource;
CGRT restarted

CGT expiration triggers
flushing buffer for HARQ
process m and
availability for
transmitting new TB.

t0          t1          t2          tk

CGRT interval          CGRT interval

CGT interval

**FIG. 8**

```
ConfiguredGrantConfig ::=              SEQUENCE {
     frequencyHopping                  ENUMERATED {intraSlot, interSlot}                              OPTIONAL,    -- Need S,
     cg-DMRS-Configuration             DMRS-UplinkConfig,
     mcs-Table                         ENUMERATED {qam256, qam64LowSE}                                OPTIONAL,    -- Need S
     mcs-TableTransformPrecoder        ENUMERATED {qam256, qam64LowSE}                                OPTIONAL,    -- Need S
     uci-OnPUSCH                       SetupRelease { CG-UCI-OnPUSCH }                                OPTIONAL,    -- Need M
     resourceAllocation                ENUMERATED { resourceAllocationType0, resourceAllocationType1, dynamicSwitch },
     rbg-Size                          ENUMERATED {config2}                                           OPTIONAL,    -- Need S
     powerControlLoopToUse             ENUMERATED {n0, n1},
     p0-PUSCH-Alpha                    P0-PUSCH-AlphaSetId,
     transformPrecoder                 ENUMERATED {enabled, disabled}                                 OPTIONAL,    -- Need S
     nrofHARQ-Processes                INTEGER (1..16),
     repK                              ENUMERATED {n1, n2, n4, n8},
     reptition over multi-TRP          ENUMERATED {enabled, disabled}
     number_of_TRPs_in_this_configuration Interger(1..16)
     repK_to_TRP1                      ENUMERATED {n1, n2, n4, n8},
     repK_to_TRP2                      ENUMERATED {n1, n2, n4, n8},
     repK_to_TRPN                      ENUMERATED {n1, n2, n4, n8},
     repK-RV                           ENUMERATED {s1-0231, s2-0303, s3-0000}                         OPTIONAL,    -- Need R
     periodicity                       ENUMERATED {
                                           sym2, sym7, sym1x14, sym2x14, sym4x14, sym5x14, sym8x14, sym10x14, sym16x14, sym20x14,
                                           sym32x14, sym40x14, sym64x14, sym80x14, sym128x14, sym160x14, sym256x14, sym320x14, sym512x14,
                                           sym640x14, sym1024x14, sym1280x14, sym2560x14, sym5120x14, sym6, sym1x12, sym2x12, sym4x12,
                                           sym5x12, sym8x12, sym10x12, sym16x12, sym20x12, sym32x12, sym40x12, sym64x12, sym80x12,
                                           sym128x12, sym160x12, sym256x12, sym320x12, sym512x12, sym640x12, sym1280x12, sym2560x12
                                       },
     configuredGrantTimer              INTEGER (1..64)                                                OPTIONAL,    -- Need R
     rrc-ConfiguredUplinkGrant         SEQUENCE {
          timeDomainOffset             INTEGER (0..5119),
          timeDomainAllocation         INTEGER  (0..15),
          frequencyDomainAllocation    BIT STRING (SIZE(18)),
          antennaPort                  INTEGER (0..31),
          dmrs-SeqInitialization       INTEGER (0..1)                                                 OPTIONAL,    -- Need R
          precodingAndNumberOfLayers   INTEGER (0..63),
          srs-ResourceIndicator        INTEGER (0..15)                                                OPTIONAL,    -- Need R
          mcsAndTBS                    INTEGER (0..31),
          frequencyHoppingOffset       INTEGER (1.. maxNrofPhysicalResourceBlocks-1)                  OPTIONAL,    -- Need R
          pathlossReferenceIndex       INTEGER (0..maxNrofPUSCH-PathlossReferenceRSs-1),
          ...
     }                                                                                                OPTIONAL,    -- Need R
```

*FIG. 9*

EP 4 173 152 B1

PUSCH
(4 repetitions)

((ọ))

TRP1 1010

UE 1000

((ọ))

TRP2 1020

K=4 repetitions of Data 1

Transmission
opportunities

Data 1 arrival

time

**FIG. 10A**

PUSCH
(2 repetitions)

PUSCH
(2 repetitions)

((ọ))

TRP1 1010

UE 1000

((ọ))

TRP2 1020

K=4 repetitions of Data 2
(2 per TRP)

Transmission
opportunities

Data 2 arrival

time

**FIG. 10B**

Receiving, from a wireless network, configurations for a plurality of configured grants of resources for UL transmission (UL CGs), wherein at least one of the UL CG configurations includes resources for transmission to a plurality of TRPs. | 1110

↓

Determining respective radio channel qualities between the UE and the respective TRPs according to one or more metrics. | 1120

↓

Receiving indications of respective radio channel qualities from the wireless network. | 1130

↓

Receiving, from the wireless network, an indication that different UL CG configurations can be selected for transmission and retransmission in a single HARQ process | 1140

↓

Selecting one or more of the UL CG configurations for transmission of data available at the UE based on characteristics associated with the data and/or with radio channels between the UE and the respective TRPs. | 1150

Selecting an UL CG configuration based on arrival time of the data relative to the transmission opportunities identified by the respective UL CG configurations. | 1151

Selecting an UL CG configuration that includes resources associated with one of the following: highest capacity MCS, or most reliable MCS. | 1152

Selecting an UL CG configuration that includes resources associated with the TRP having the best radio channel quality towards the UE. | 1153

Selecting a first UL CG configuration for a first portion of the plurality of repetitions and a second UL CG configuration for a second portion of the plurality repetitions. | 1154

Selecting a first UL CG configuration for an initial transmission in HARQ. | 1155

Selecting a second UL CG configuration for at least one retransmission. | 1156

↓

Transmitting the data to one or more of the plurality of TRPs on resources of the selected one or more UL CG configurations. | 1160

Transmitting one or more repetitions of a transport block (TB), each to one of the TRPs. | 1161

Transmitting, in a hybrid ARQ (HARQ) process, an initial transmission of a TB and one or more retransmissions of the TB. | 1162

*FIG. 11*

Transmitting, to a UE, configurations for a plurality of configured grants of resources for UL transmission (UL CGs), wherein at least one of the UL CG configurations includes resources for transmission to a plurality of TRPs. | 1210

Determining respective radio channel qualities between the UE and the respective TRPs according to one or more metrics. | 1220

Sending indications of the determined radio channel qualities to the UE. | 1230

Transmitting, to the UE, an indication that different UL CG configurations can be selected for transmission and retransmission in a single HARQ process | 1240

Receiving UL data, from the UE via one or more of the plurality of TRPs, on resources of the one or more of the UL CG configurations that were selected by the UE. | 1250

Receiving one or more repetitions of a transport block (TB), each via one of the TRPs. | 1251

Receiving a first portion of the plurality of repetitions on resources of a first UL CG configuration. | 1252

Receiving a second portion of the plurality of repetitions on resources of a second UL CG configuration. | 1253

Receiving, via a first TRP, respective repetitions of the TB in respective transmission opportunities when the first UL CG configuration is selected. | 1254

Receiving, during one or more of the transmission opportunities, at least one of the first number and at least one of the second number concurrently via the respective TRPs when the second UL CG configuration is selected. | 1255

Receiving an initial transmission of the TB, in HARQ, on resources of a first UL CG configuration. | 1256

Receiving at least one retransmission of the TB on resources of a second UL CG configuration. | 1257

*FIG. 12*

1310          1320          1330          1300

| Processor | 1321 ⎯ Program memory | Data memory |

Bus
1370

| Radio Transceiver | User Interface | Control Interface |

1340          1350          1360

**FIG. 13**

1410          1420          1430          1400

| Processor | 1421 ⎯ Program memory | Data memory |

Bus
1470

| Radio Network Interface | Core Network Interface | OA&M Interface |

1440          1450          1460

**FIG. 14**

1520

UE
1510

Radio Access Network
1530

Core Network
1540

Internet
1550

Host Computer
1560

**FIG. 15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019244207 A1